(19) Europäisches Patentamt
European Patent Office
Office européen des brevets

(11) **EP 3 743 795 B1**

(12) **EUROPEAN PATENT SPECIFICATION**

(45) Date of publication and mention
of the grant of the patent:
**30.11.2022 Bulletin 2022/48**

(21) Application number: **19701002.8**

(22) Date of filing: **10.01.2019**

(51) International Patent Classification (IPC):
**G06F 3/041** *(2006.01)*

(52) Cooperative Patent Classification (CPC):
**G06F 3/044; G01L 1/16; G06F 3/0414;
G06F 3/0416;** G06F 2203/04106

(86) International application number:
**PCT/GB2019/050067**

(87) International publication number:
**WO 2019/145674 (01.08.2019 Gazette 2019/31)**

(54) **PRESSURE SIGNAL PROCESSING**

DRUCKSIGNAL VERARBEITUNG

ANALYSE DU SIGNAL D'UN SENSEUR À LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2018 GB 201801099**

(43) Date of publication of application:
**02.12.2020 Bulletin 2020/49**

(73) Proprietor: **Cambridge Touch Technologies Ltd.**
**Cambridge, Cambridgeshire CB4 0GN (GB)**

(72) Inventors:
• **MICCI, Riccardo**
  **Cambridge, Cambridgeshire CB4 0GN (GB)**
• **VIT, Matteo**
  **Cambridge, Cambridgeshire CB4 0GN (GB)**
• **NATHAN, Arokia**
  **Cambridge, Cambridgeshire CB4 0GN (GB)**
• **BASTANI, Babak**
  **Cambridge, Cambridgeshire CB4 0GN (GB)**

(74) Representative: **Dunleavy, Christopher Squire et al**
**Venner Shipley LLP**
**Byron House**
**Cambridge Business Park**
**Cowley Road**
**Cambridge CB4 0WZ (GB)**

(56) References cited:
| | |
|---|---|
| EP-A1- 2 902 886 | WO-A1-2016/199626 |
| WO-A1-2016/199626 | WO-A1-2017/109455 |
| WO-A2-2006/135483 | GB-A- 2 138 567 |
| JP-A- 2015 097 068 | US-A1- 2018 045 586 |

EP 3 743 795 B1

**Description**

**Field of the invention**

The present invention relates to a touch panel for combined capacitive and pressure sensing.

**Background**

Resistive and capacitive touch panels are used as input devices for computers and mobile devices. One type of capacitive touch panel, projected capacitance touch panels, is often used for mobile devices because an exterior layer may be made of glass, providing a hard surface which is resistant to scratching. An example of a projected capacitance touch panel is described in US 2010/0079384 A1.

Projected capacitance touch panels operate by detecting changes in electric fields caused by the proximity of a conductive object. The location at which a projected capacitance touch panel is touched is often determined using an array or grid of capacitive sensors. Although projected capacitance touch panels can usually differentiate between single-touch events and multi-touch events, they suffer the drawback of not being able to sense pressure. Thus, projected capacitance touch panels tend to be unable to distinguish between a relatively light tap and a relatively heavy press. A touch panel that can sense pressure can allow a user to interact with a device in new ways by providing additional information to simply position of a touch.

WO 2016/102975 A2 and WO 2017/109455 A1 describe touch panels which are able to combine projected capacitance touch sensing with piezoelectric pressure sensing in a single touch panel.

Piezoelectric sensors generate transient signals, and there have been attempts to develop methods for converting the transient piezoelectric signals into signals which are representative of static applied forces. For example, WO 2017/122466 A1,

JP 2015/097068 A and EP 2 902 886 A1 describe methods for conditional integration of signals from piezoelectric sensors.

WO 2016/199626 A1 describes a pressing sensor that includes a pressing portion deformed by pressing, a piezoelectric sensor that generates a detection voltage based on the deformation amount, and a first current-voltage conversion circuit that converts a charge/discharge current for a capacitance of the piezoelectric sensor into a voltage signal and outputs the voltage signal. A deformation amount detector obtains an integrated value of an output voltage and detects the integrated value as the deformation amount of the pressing portion. A minute vibration sensor detects presence or absence of minute vibration of the pressing portion according to presence or absence of a minute fluctuation state of the output voltage and an integration reset processor resets the integrated value in response to absence of the minute vibration.

EP2902886 discloses for a piezoelectric sensor standard integration during times of touch.

**Summary**

According to a first aspect of the invention there is provided a method including receiving, from a touch panel, pressure signals from a plurality of piezoelectric sensors and capacitance signals from a plurality of capacitive touch sensors. The method also includes determining, based on the capacitance signals, a user interaction period during which a user interaction with the touch panel occurs. The method also includes generating processed pressure signals based on the received pressure signals. The method also includes measuring a force applied to each of the plurality of piezoelectric sensors by the user interaction during the user interaction period based on conditionally integrating the corresponding processed pressure signals according to a value of a state register corresponding to the user interaction. Each value of the state register corresponds to different behaviour for integrating the processed pressure signals. The state register takes one of two or more values. Each user interaction is initialised in a first state value. The user interaction transitions between state register values during each user interaction in dependence upon the current state register value and one or more pressure signal properties.

Pressure signal properties may include one or more of a signal value, a signal gradient, a signal variance or standard deviation, a signal range, a signal minimum, a signal maximum, a time elapsed since the start of the user interaction period, a time elapsed since the state register value was changed, a time elapsed since detecting a peak in the pressure signal, and so forth. Pressure signal properties may include comparing a signal value, a signal gradient, a signal variance or standard deviation, a signal range, a signal minimum or a signal maximum against one or more corresponding predetermined thresholds or ranges.

The piezoelectric sensors may be coplanar with, or provided within the same layer as, the capacitance sensors. The piezoelectric sensors and the capacitance sensors may comprise one or more electrodes in common. The piezoelectric sensors and the capacitance sensors may be provided by a single or common structure. The piezoelectric sensors and the capacitance sensors may be separate. The piezoelectric sensors and the capacitance sensors may be provided in separate layers.

The method may also include, for each piezoelectric sensor, in response to detecting the start of a user interaction, setting a residual DC offset value to zero. The method may also include, during the user interaction period, maintaining a sample buffer of processed pressure signal values, determining a gradient and variance of the values stored in the sample buffer, determining a difference between the residual DC offset value and the average value of the values stored in the sample buffer. The method may also include, in response to the gradient and variance being less than corresponding flat-period threshold values and the difference being less than an offset-shift threshold, updating the residual DC offset value to the average value of the values stored in the sample buffer. The method may also include subtracting the residual DC offset value from the processed pressure signal before integration.

The method may also include setting a movement flag to a value of true in response to determining, based on the capacitance signals, that the location of a user interaction is moving. The method may also include, in response to the movement flag does not have a value of true, setting the flat-period threshold values to first predetermined flat-period threshold values. The method may also include, in response to the movement flag has a value of true, setting the flat-period threshold values to second predetermined flat-period threshold values.

The method may also include, for each piezoelectric sensor, locating and determining an initial peak value of the processed pressure signal during the user interaction period.

The method may also include, in response to locating an initial peak value, setting a user interaction type register to correspond to a soft touch value in response to the elapsed time since the start of the user interaction period exceeds a predetermined threshold value. The method may also include, in response to locating an initial peak value, setting the user interaction type register to correspond to a hard touch value in response to the elapsed time since the start of the user interaction period does not exceed the predetermined threshold value.

The method may also include setting the user interaction type register to the hard touch value in response to the residual DC offset value is updated and the user interaction type register corresponds to the soft touch value.

The method may also include setting the user interaction type register to the soft touch value in response to the processed pressure signal exceeds a predetermined fraction of the initial peak value, the gradient of the values stored in the sample buffer exceed a soft-transition threshold, and the user interaction type register corresponds to the hard touch value.

The method may also include setting the state register to a second state value in response to the state register corresponds to the first state value, a time elapsed since the start of the user interaction exceeds a minimum duration and the processed pressure signal has a sign corresponding to an increasing force.

The method may also include setting the state register to a third state value in response to the state register corresponds to the second state value and the processed pressure signal has a sign corresponding to a decreasing force.

The method may also include setting the state register to a fourth state value in response to the state register corresponds to the second state value and the user interaction type register corresponds to the soft touch value.

The method may also include determining a signal gradient of the processed pressure signal during the user interaction. The method may also include setting the state register to a fourth state value in response to the state register corresponds to the third state value and the processed pressure signal has a signal gradient below a signal gradient threshold. The method may also include, if the state register corresponds to the fourth state value, processed pressure signal values which exceed a noise threshold are integrated and processed pressure signal values which do not exceed the noise threshold are not integrated.

The method may also include, if the state register corresponds to the first state value, processed pressure signal values having a sign corresponding to an increasing force are integrated and processed pressure signal values corresponding to a decreasing force are not integrated.

The method may also include, if the state register corresponds to the second state value, all processed pressure signal values are integrated.

The method may also include, if the state register corresponds to the third state value, no processed pressure signal values are integrated

The method may also include determining, based on the capacitance signals, two or more user interactions with the touch panel. The method may also include determining a location of each user interaction based on the capacitance signals. The method may also include assigning a piezoelectric sensor which is closest to the location of each user interaction as a decision making sensor. The method may also include assigning each other piezoelectric sensor to correspond to the closest decision making sensor. The method may also include, in response to a piezoelectric sensor is a decision making sensor, updating a state register corresponding to the piezoelectric sensor independently. The method may also include, in response to a piezoelectric sensor is not a decision making sensor, updating a state register corresponding to the piezoelectric sensor to be equal to the state register of the corresponding decision making sensor.

The state register may store values in the form of integers, characters, strings or floating point values.

According to a second aspect of the invention, there is provided a controller configured for connection to a touch panel comprising a plurality of piezoelectric sensors and a plurality of capacitive touch sensors, the controller configured to receive pressure signals from the plurality of piezoelectric sensors and capacitance signals from the plurality of capacitive touch sensors. The controller is also configured to determine, based on the capacitance signals, a user interaction period during which a user interaction with the touch panel occurs. The controller is also configured to generate processed pressure signals based on the received pressure signals. The controller is also configured to measure a force applied to each of the plurality of piezoelectric sensors by the user interaction during the user interaction period based on conditionally integrating the corresponding processed pressure signals according to a value of a state register corresponding to the user interaction. Each value of the state register corresponds to different behaviour for integrating the processed pressure signals. The state register takes one of two or more values. Each user interaction is initialised in a first state value. The user interaction transitions between state register values during each user interaction in dependence upon the current state register value and one or more pressure signal properties.

Pressure signal properties may include one or more of a signal value, a signal gradient, a signal variance or standard deviation, a signal range, a signal minimum, a signal maximum, a time elapsed since the start of the user interaction period, a time elapsed since the state register value was changed, a time elapsed since detecting a peak in the pressure signal, and so forth. Pressure signal properties may include comparing a signal value, a signal gradient, a signal variance or standard deviation, a signal range, a signal minimum or a signal maximum against one or more corresponding predetermined thresholds or ranges.

## Brief Description of the drawings

Certain embodiments of the present invention will now be described, by way of example, with reference to the accompanying drawings in which:

Figure 1 is a schematic cross section of a touch panel for combined piezoelectric and capacitive sensing;
Figure 2 illustrates a system for combined piezoelectric and capacitive sensing;
Figure 3 schematically illustrates a force profile of a user interaction with a touch panel;
Figure 4 illustrates an idealised piezoelectric pressure signal corresponding to the force profile shown in Figure 3;
Figure 5 shows an example of a measured piezoelectric pressure signal corresponding to a user interaction with a touch panel;
Figure 6 shows an applied force measured based on the piezoelectric pressure signal shown in Figure 5;
Figure 7 is a process-flow diagram of a method of measuring the force applied to a touch panel;
Figure 8 is a process-flow diagram of an exemplary implementation of a method of measuring the force applied to a touch panel;
Figure 9 is a process-flow diagram of a calibration process;
Figure 10 is a process-flow diagram of a first example of a re-calibration process;
Figure 11 is a process-flow diagram of a second example of a re-calibration process;
Figure 12 is a process-flow diagram of a push elaboration process;
Figure 13 illustrates the positions of a number of concurrent user interactions with a touch panel;
Figure 14 illustrates assigning decision making electrodes of a touch panel system;
Figure 15 illustrates assigning the dependence of non decision making electrodes of a touch panel system on decision making electrodes;
Figure 16 illustrates processing of signals from an electrode of a touch panel system;
Figure 17 shows an example of a measured piezoelectric pressure signal corresponding to a "soft" type user interaction with a touch panel;
Figure 18 shows an applied force measured based on the piezoelectric pressure signal shown in Figure 17;
Figure 19 is a process-flow diagram of an electrode channel updating process;
Figure 20 shows an example of a measured piezoelectric pressure signal corresponding to a "hard" type user interaction which transitions to a "soft" type user interaction;
Figure 21 shows an applied force measured based on the piezoelectric pressure signal shown in Figure 20;
Figure 22 shows an example of a measured piezoelectric pressure signal corresponding to a "soft" type user interaction which transitions to a "hard" type user interaction;
Figure 23 shows an applied force measured based on the piezoelectric pressure signal shown in Figure 22;
Figure 24 is a process-flow diagram of a first example of a state updating process;
Figure 25 is a process-flow diagram of a second example of a state updating process; and
Figure 26 is a process-flow diagram of an output force updating process.

**Detailed description**

In the following description, like parts are denoted by like reference numerals.

A problem which is encountered in piezoelectric pressure sensing is that the signals generated by applying force to a piezoelectric material are inherently transient. Consequently, output signals from piezoelectric pressure sensors require processing to allow measurement of static or slowly varying applied forces. The methods of the present specification are concerned with improving the accuracy and reliability of forces measured using a piezoelectric based touch panel system, whilst maintaining or improving the speed of processing the piezoelectric pressure signals received from the touch panel.

Combined pressure and capacitance touch panel system

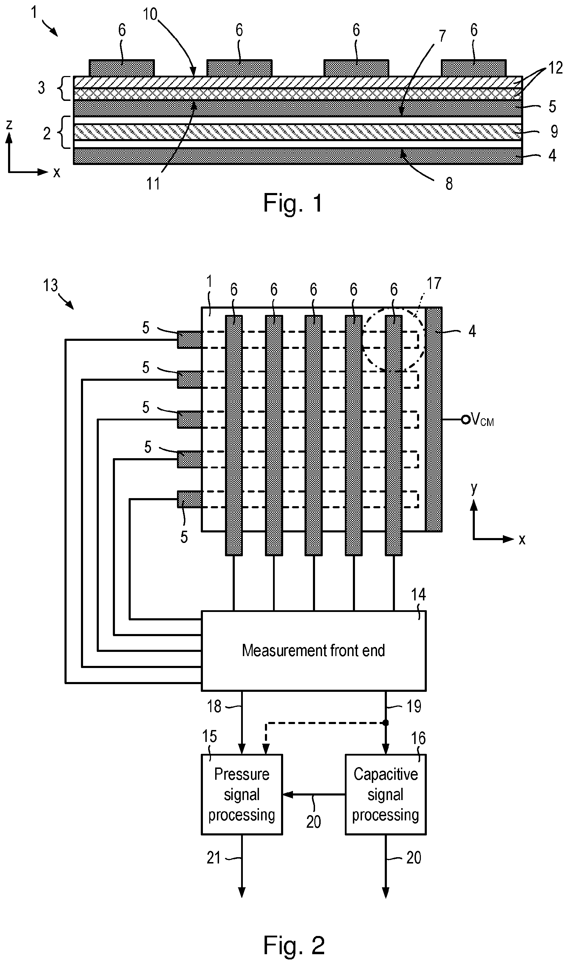

Referring to Figure 1, a simplified cross-section of a touch panel 1 for combined pressure and capacitance measurements is shown.

The touch panel 1 includes first and second layer structures 2, 3, a common electrode 4, a number of first sensing electrodes 5 and a number of second sensing electrodes 6.

The first layer structure 2 has a first face 7 and a second, opposite, face 8. The first layer structure 2 includes one or more layers, including at least a layer of piezoelectric material 9. Each layer included in the first layer structure 2 is generally planar and extends in first and second directions x, y which are perpendicular to a thickness direction z. The one or more layers of the first layer structure 2 are arranged between the first and second faces 7, 8 such that the thickness direction z of each layer of the first layer structure 2 is perpendicular to the first and second faces 7, 8. The first sensing electrodes 5 are disposed on the first face 7 of the first layer structure 2, and the common electrode 4 is disposed on the second face 8 of the first layer structure 2.

Preferably, the piezoelectric layer 9 is formed of a piezoelectric polymer, for example a suitable fluoropolymer such as polyvinylidene fluoride (PVDF). However, the piezoelectric layer may alternatively be formed from a layer of a piezoelectric ceramic such as lead zirconate titanate (PZT).

The second layer structure 3 has a third face 10 and a fourth, opposite, face 11. The second layer structure 3 includes one or more dielectric layers 12. Each dielectric layer 12 is generally planar and extends in first and second directions x, y which are perpendicular to a thickness direction z. The one or more dielectric layers 12 of the second layer structure 3 are arranged between the third and fourth faces 10, 11 such that the thickness direction z of each dielectric layer 12 of the second layer structure 3 is perpendicular to the third and fourth faces 10, 11. The second sensing electrodes 6 are disposed on the third face 10 of the second layer structure 3, and the fourth face 11 of the second layer structure 3 contacts the first sensing electrodes 5. Alternatively, the first sensing electrodes 5 maybe disposed on the fourth face 11.

Preferably, the dielectric layer(s) 12 include layers of a polymer dielectric material such as polyethylene terephthalate (PET) or layers of pressure sensitive adhesive (PSA) materials. However, the dielectric layer(s) 12 may include layers of a ceramic insulating material such as aluminium oxide.

Preferably, the common electrode 4, the first sensing electrodes 5 and/or the second sensing electrodes 6 are formed of indium tin oxide (ITO) or indium zinc oxide (IZO). However, the common electrode 4, the first sensing electrodes 5 and/or the second sensing electrodes 6 may be formed of conductive polymers such as polyaniline, polythiphene, polypyrrole or poly(3,4-ethylenedioxythiophene) polystyrene sulfonate (PEDOT/PSS). The common electrode 4, the first sensing electrodes 5 and/or the second sensing electrodes 6 may take the form of metal films such as aluminium, copper, silver or other metals suitable for deposition and patterning as a thin film. The common electrode 4, the first sensing electrodes 5 and/or the second sensing electrodes 6 may be formed from a metal mesh, nanowires, optionally silver nanowires, graphene, or carbon nanotubes.

Referring also to Figure 2, a combined pressure and capacitance sensing system 13 is shown.

The combined pressure and capacitance sensing system 13 includes a touch panel 1, a measurement front end 14, a pressure signal processing module 15 and a capacitive signal processing module 16.

The first sensing electrodes 5 each extend in the first direction x and the first sensing electrodes 5 are disposed in an array evenly spaced in the second direction y. The second sensing electrodes 6 each extend in the second direction y and the second sensing electrodes 6 are disposed in an array evenly spaced in the first direction x. The common electrode 4 is extensive such that the common electrode 4 at least partially underlies each of the first and second sensing electrodes 5, 6. The common electrode 4 may be substantially coextensive with the second face 8 of the first layer structure 2. In this way, each intersection 17 of a first sensing electrode 5 with a second sensing electrode 6 may effectively provide a separate touch sensor. Each touch sensor formed by an intersection 17 is both a piezoelectric touch sensor and a capacitive touch sensor.

The touch panel 1 may be bonded overlying the display (not shown) of an electronic device (not shown) which incorporates the combined pressure and capacitance sensing system 13. For example, the combined pressure and capacitance sensing system 13 may be incorporated into a mobile telephone, a tablet computer, a portable or laptop computer, a display, a television, and so forth.

Herein, the term "user interaction" may refer to a user touching or pressing a touch panel 1 or a layer of material overlying a touch panel. A user interaction may involve a user's digit or a stylus (whether conductive or not). A touch interaction may include a user's digit or conductive stylus being proximate to the touch panel 1 without direct physical contact or without applying significant pressure. A press interaction involves a user pressing the touch panel 1 with sufficient force to cause straining of the layer of piezoelectric material 9 and generation of a piezoelectric response. The location of a user interaction may change with time as a user moves a digit or stylus. The touch panel 1 and system 13 support the measurement and tracking of one or more concurrent user interactions, sometimes referred to as "multi-touch" interactions.

The measurement front end 14 performs combined pressure and capacitance measurements on the touch panel 1. The measurement front end 14 measures pressures by detecting the voltages induced between the first sensing electrodes 5 and the common electrode 4 by straining of the piezoelectric layer 9 in response to user interactions applying pressure, and/or voltages induced between the second sensing electrodes 6 and the common electrode 4. In this way, the measurement front end 14 may provide one- or two-dimensional resolved measurements of pressures applied to the touch panel 1 by one or more user interactions. Preferably, pressures are measured by both the first and the second sensing electrodes 5, 6. The measurement front end 14 also measures mutual capacitances for each intersection 17 of the first and second sensing electrodes 5, 6.

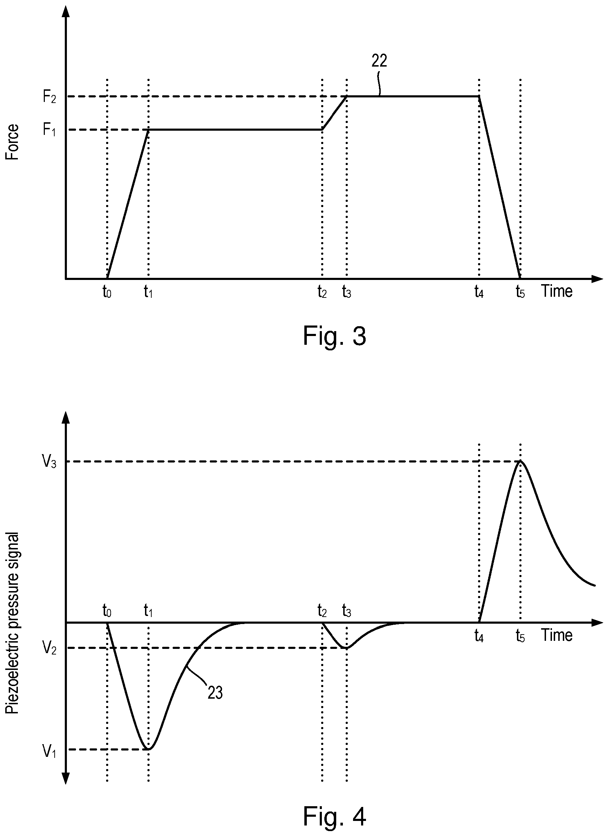

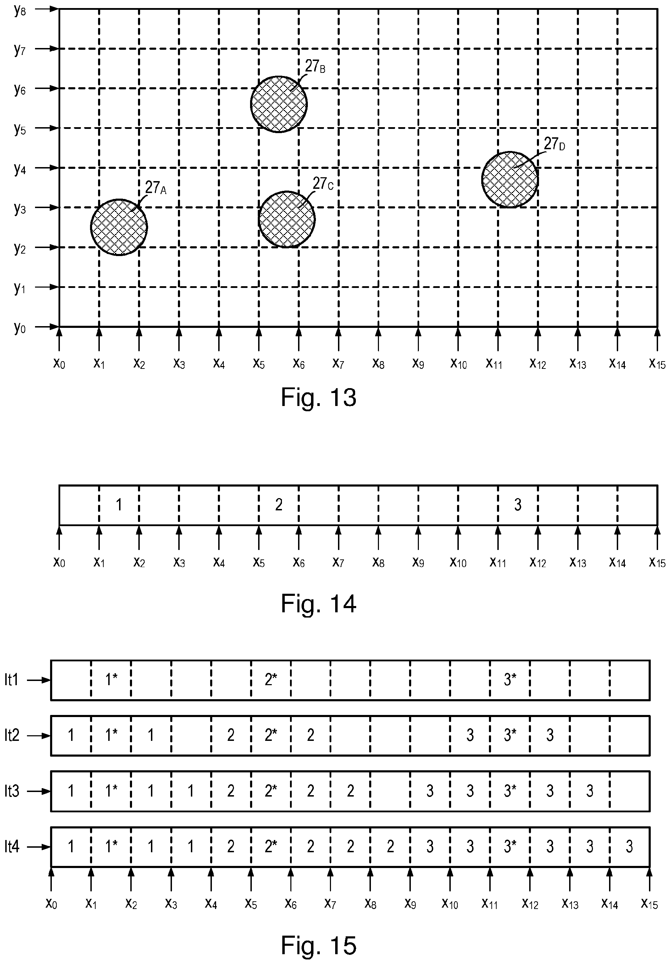

The measurement front end 14 may measure piezoelectric pressure signals and capacitances concurrently. For example, the measurement front end 14 may be configured as described in WO 2017/109455 A1, or as described in WO 2016/102975 A2, and the entire contents of both documents are hereby incorporated by reference. In particular, suitable combined pressure and capacitance touch panel systems 13 are shown in, and described with reference to, Figures 4 to 23 of WO 2017/109455 A1. Furthermore, suitable combined pressure and capacitance touch panel systems 13 are shown in, and described with reference to, Figures 15 to 29 of WO 2016/102975 A2.

The measurement front end 14 outputs pressure signals 18 and capacitance signals 19. The pressure signals 18 correspond to amplified and/or integrated piezoelectric voltages induced between the first sensing electrodes 5 and the common electrode 4 and/or between the second sensing electrodes 6 and the common electrode 4. When the measurement front end 14 measures piezoelectric pressure signals and capacitances concurrently, for example, when the measurement front end 14 is configured as described in WO 2017/109455 A1 or as described in WO 2016/102975 A2, the pressure signals 18 and capacitance signals 19 are obtained by frequency separation of signals corresponding to each sensing electrode 5, 6 to obtain the signals 18, 19. The measurement front end 14 may include a low-frequency cut-off filter configured to reject a pyroelectric response of the layer of piezoelectric material 9. The low frequency cut-off may take a value between 1 Hz and 7 Hz. The measurement front end 14 may include a notch filter configured to reject a mains power distribution frequency, for example, 50 Hz or 60 Hz.

The capacitive signal processing module 16 receives and processes the capacitance signals 19 to determine capacitance information 20 including the number of user interactions and the x-y coordinates of each user interaction. The capacitive signal processing module 16 may function in the same way as a conventional capacitive touch controller, and may be provided by a conventional capacitive touch controller. In some examples, the capacitive signal processing module 16 also provides driving signals for the capacitance measurements to the measurement front end 14. The self-capacitances of the sensing electrodes 5, 6, or the mutual capacitances between any pair of a first sensing electrode 5 and a second sensing electrode 6, may be measured by the capacitive signal processing module 16 according to known methods.

The pressure signal processing module 15 receives the pressure signals 18 and the capacitance information 20, including the number of user interactions and the x-y coordinates of each user interaction. Optionally, the pressure signal processing module 15 may also receive the unprocessed capacitance signals 19. The pressure signal processing module 15 is configured to measure, using the transient pressure signals 18, one or more output forces 21 corresponding to user interactions applying pressure to the touch panel 1. The capacitance information 20 is used in the measurement of output forces 21. Methods of measuring the output forces 21 are explained in detail hereinafter. Optionally, the unprocessed capacitance signals 19 may also be used by the signal processing module 15, for example, to contribute to estimating the quality and reliability of signals from a given first or second sensing electrode 5, 6.

Although the first and second sensing electrodes 5, 6 have been shown as being substantially rectangular, any other shapes known for use in projected capacitance touch panels may be used. For example, diamond patterned electrodes may be used for the first and second sensing electrodes 5, 6.

The first layer structure 2 of the touch sensor 1 may include only the layer of piezoelectric material 9, such that the first and second opposite faces 7, 8 are faces of the piezoelectric material layer 9. Alternatively, the first layer structure 2 may include one or more additional dielectric layers (not shown) which are stacked between the layer of piezoelectric material 9 and the first face 7 of the first layer structure 2. The first layer structure 2 may include one or more additional dielectric layers (not shown) stacked between the second face 8 of the first layer structure 2 and the layer of piezoelectric material 9. Preferably, one or more additional dielectric layers (not shown) include layers of a polymer dielectric material such as polyethylene terephthalate (PET), or layers of pressure sensitive adhesive (PSA) material. However, one or more additional dielectric layers (not shown) may include layers of a ceramic insulating material such as aluminium oxide. The one or more additional dielectric layers (not shown) may be similar to the dielectric layers 12 of the second layer structure 3.

The second layer structure 3 may include a single dielectric layer 12, such that the third and fourth opposite faces 10, 11 are faces of a single dielectric layer 12. Alternatively, a second layer structure 3 need not be used, and the second sensing electrodes 6 could instead be disposed on the first face 7 along with the first sensing electrodes 5.

In Figures 1 and 2, the first and second faces 7, 8 and the layers of the first and second layer structures 2, 3 are shown extending along orthogonal axes labelled x and y, and the thickness direction of each layer of the first and second layer structures 2, 3 is aligned with an axis labelled z which is orthogonal to the x and y axes. However, the first, second and thickness directions x, y, z need not form a right handed orthogonal set as shown. For example, the first and second directions x, y may intersect at an angle of 30 degrees or 45 degrees or any other angle greater than o degrees and less than 90 degrees.

The details of the touch panel 1 and system 13 described hereinbefore and with reference to WO 2017/109455 A1 and WO 2016/102975 A2 are provided for the purposed of understanding the methods of the present specification, but the methods of the present specification are not limited to the touch panel 1 and system 13. The methods of the present specification may be employed with any touch panel system which includes an array of piezoelectric sensors and an array of capacitance sensors.

Referring also to Figure 3 a schematic force input 22 applied to the touch panel 1 is shown.

The layer of piezoelectric material 9 is poled and becomes polarised with a polarisation $\underline{\mathbf{P}}$ in response to straining caused by a user interaction which applies sufficient force. The polarisation $\underline{\mathbf{P}}$ of the layer of piezoelectric material 9 results in a corresponding charge $Q_{piezo}(t)$ being developed between the common electrode 4 and the sensing electrodes 5, 6. The straining which produces the polarisation $\underline{\mathbf{P}}$ may result from a compression or a tension. The straining which produces the polarisation $\underline{\mathbf{P}}$ may be an in-plane stretching of the piezoelectric material layer 9. Intimate contact between the layer of piezoelectric material 9 and the sensing electrodes 5, 6 is not required. Generally, a greater straining of the layer of piezoelectric material 9 (caused by a more forceful user interaction) will result in a greater polarisation $\underline{\mathbf{P}}$, and a correspondingly larger magnitude of the charge difference $\Delta Q_{piezo}$ induced on the sensing electrodes 5, 6. A piezoelectric response $I_{piezo}(t)$, which is the current associated with the charge $Q_{piezo}(t)$, may be amplified and/or integrated to determine a piezoelectric pressure signal 23 (Figure 4).

Referring also to Figure 4, an idealised piezoelectric pressure signal 23 corresponding to the force input 22 is shown.

The piezoelectric pressure signal 23, for example as output from and/or amplified by the measurement front end 14, is fundamentally a transient signal. The induced piezoelectric voltages decay with time due to leakage currents. Moreover, the output of an integrating charge amplifier, which may be used to amplify a piezoelectric current $I_{piezo}$, also decays with time.

For example, during a first loading period, $t_0 \leq t \leq t_1$, the force 22 increases steadily from zero to a first force value $F_1$. Provided that the rate of increase of the force 22 is fast compared to the rate of decay of the piezoelectric pressure signal 23, the corresponding piezoelectric pressure signal 23 decreases steadily during the first loading period $t_0 \leq t \leq t_1$, reaching a first peak value of $V_1$ as the force 22 reaches the first force value $F_1$. The force 22 is then held constant at $F_1$ for a first holding period, $t_1 < t \leq t_2$. During the first holding period, $t_1 < t \leq t_2$, the piezoelectric pressure signal 23 decays upwards from the first peak value $V_1$ towards, in the ideal case, zero DC offset.

The force 22 increases again from the first force value $F_1$ to a second force value $F_2$ during a second loading period $t_2 < t \leq t_3$. Provided that the rate of increase of the force 22 is fast compared to the rate of decay of the piezoelectric pressure signal 23, the corresponding piezoelectric pressure signal 23 decreases steadily during the second loading period $t_2 < t \leq t_3$, reaching a second peak value of $V_2$ as the force 22 reaches the second force value F2. The force 22 is then held constant at $F_2$ for a second holding period, $t_3 < t \leq t_4$. During the second holding period, $t_3 < t \leq t_4$, the piezoelectric pressure signal 23 decays upwards from the second peak value $V_2$ towards, in the ideal case, zero signal.

At the end of the second holding period, $t_3 < t \leq t_4$, the user interactions ends with the release of the force 22 during an unloading period $t_4 < t \leq t_5$. Provided that the rate of decrease of the force 22 is fast compared to the rate of decay of the piezoelectric pressure signal 23, the corresponding piezoelectric pressure signal 23 increases steadily during the unloading period $t_4 < t \leq t_5$, reaching a third peak value $V_3$, as the force 22 reaches zero. The third peak value $V_3$, resulting from unloading rather than loading, has opposite sign to the first and second peak values $V_1$, $V_2$. After the end of the user interaction, the piezoelectric pressure signal 23 decays towards, in the ideal case, zero DC offset.

Although Figure 4 illustrates the piezoelectric pressure signal 23 becoming negative in response to loading and positive in response to unloading, the polarity of the piezoelectric pressure signal 23 may be reversed in other examples, depending on the configuration of the touch panel 1 and system 13.

When the piezoelectric pressure signal 23 is ideal, as illustrated in Figure 4, the decay of the piezoelectric pressure signal 23 may be compensated for by various methods such as, for example, conditional integration of the piezoelectric pressure signal 23 based on the gradient and/or values of the piezoelectric pressure signal 23. By integrating the piezoelectric pressure signal 23 when the gradient and value of the piezoelectric pressure signal 23 are the same sign, an estimated measurement proportional to the applied force 22 maybe recovered.

However, when a touch panel 1 and system 13 for combined pressure and capacitance measurements is used, piezoelectric pressure signals 23 may in practice be subjected to continuous variations in DC offsets and significant sources of noise which may prevent the reliable operation of naïve value and gradient based conditional integrations.

Without wishing to be limited by theory or particular, specific, examples, it may be helpful for understanding the present specification to discuss potential sources of DC offset variations and noise for a touch panel 1 and system 13. The touch panel 1 and system 13 may often be installed in a handheld, battery operated device (not shown). Such devices are typically ungrounded, or only weakly grounded, which may increase the susceptibility to noise pickup and to variation in DC offsets. Additionally, a user may frequently become charged with static electricity as a result of interactions between their clothing, footwear and/or their environment. This may further contribute to variations in DC offsets, and may also result in electrostatic discharging between the user's digit and/or stylus upon an initial contact with the touch panel 1. Such electrostatic discharges can apply charges $Q_{esd}$ to the sensing electrodes 5, 6 close to a user interaction which may equal, or even substantially exceed, charges $Q_{piezo}$ resulting from applied forces. Furthermore, short interactions such as tapping a touch panel 1 in rapid succession may confuse gradient and value based approaches because the signal from one tap may not have completely decayed before the next tap commences, leading to inaccurate measurements of forces. The preceding discussion is not exhaustive, and many additional factors may contribute to DC offset variations and noise levels of a touch panel 1 and system 13. Therefore, there is a need for methods of measuring forces applied to a touch panel 1 with improved reliability, without sacrificing sensitivity and/or computational speed.

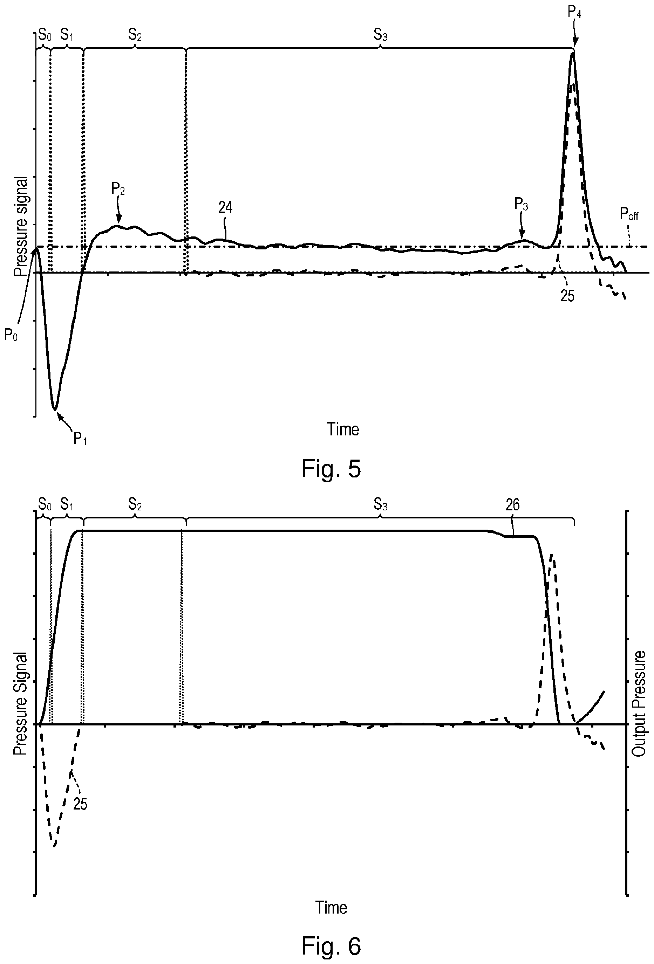

For example, referring also to Figure 5, an example of a measured piezoelectric pressure signal 24 obtained using an example of the touch panel 1 and system 13 is shown.

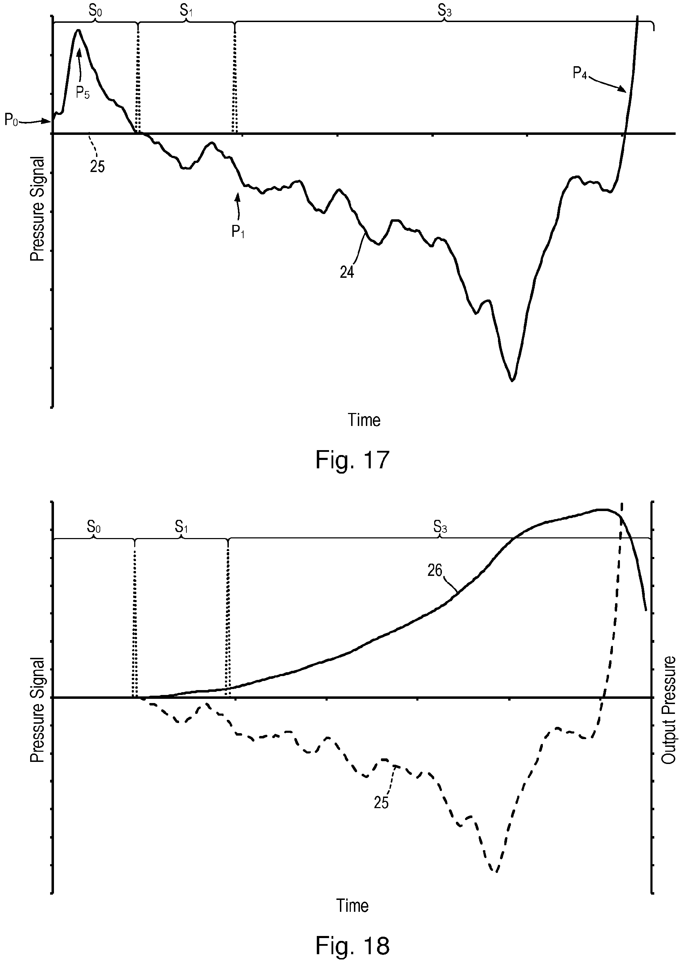

It may be observed that the measured piezoelectric pressure signal 24 deviates from the ideal piezoelectric pressure signal 23 in several important ways. Firstly, the start of the touch event, determined from the capacitance information 20, occurs when the pressure signal 24 values, P(t), are not at zero DC offset. Instead, at a time t=o with respect to the beginning of the user interaction, the pressure signal 24 values P(t) may often display an initial DC offset value $P_o = P(o)$. This may occur for a variety of reasons such as, for example, a residual DC offset following a prior user interaction, static discharge of a user's digit upon initial contact to the touch panel 1, a repeated touch before signal from a prior user interaction has fully decayed, and so forth. The initial offset $P_o$ may be significant in practice. When a user's digit undergoes static discharge, the initial offset $P_o$ may sometimes be accompanied by an initial false peak $P_5$ (Figure 17) which is believed to result from electrostatic discharge. Including an initial false peak $P_5$ (Figure 17) may result in inaccurate force outputs. However, simply setting gradient and value thresholds to exclude initial offsets $P_o$ and/or false peaks $P_5$ (Figure 17) will cause reduced sensitivity throughout the remainder of the user interaction.

Secondly, after an initial peak $P_1$ is reached, the pressure signal 24 values P(t) may decay to an offset value $P_{off}$ which is not equal to zero. It has been observed that the offset value $P_{off}$ is generally the opposite sign to the initial peak $P_1$. It has also been observed that the offset value $P_{off}$ may change after each user interaction with a particular sensing electrode 5, 6, such that conventional DC offset correction and calibration methods may be less effective. Furthermore, the pressure signal 24 values P(t) may, during a proportion of user interactions, display a false peak P2 during which the pressure signal 24, P(t), overshoots the offset value $P_{off}$ before settling. The magnitude of a false peak $P_2$ can be significant during some user interactions.

As explained hereinbefore, simply setting gradient and value thresholds to exclude initial offsets and/or electrostatic discharge peaks, offset values $P_{off}$ and false peaks $P_2$, $P_5$ (Figure 17) may cause reduced sensitivity throughout the remainder of the user interaction. This may lead to failing to detect, for example, a small peak $P_3$ corresponding to a user's slight lift-off of pressure just prior to a main unloading peak $P_4$.

The methods detailed in the present specification are intended to address such issues by providing methods to measure forces applied to a touch panel 1 which are more robust against variations in DC offsets and other sources of noise, without the need to increase thresholds and reduce sensitivity. At the same time, the methods detailed in the present specification may be efficiently executed by a controller, application specific integrated circuit (ASIC), microcontroller or microprocessor at a speed which is sufficient to avoid introducing excessive latency which might be perceptible by a user. Excessive latency may be annoying to a user or, if the latency becomes too large, it may make providing correct input difficult or impossible.

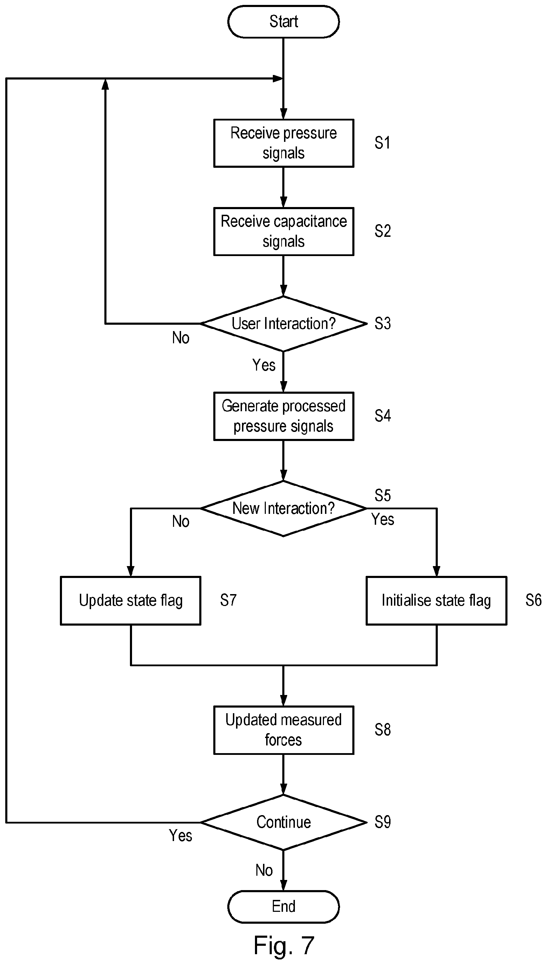

Referring also to Figures 6 and 7, the methods of the present specification shall be explained.

Pressure signals 18 are received from a number of piezoelectric sensors supported on or embedded within a touch panel (step **S1**).

Capacitance signals 19 are received from a number of capacitive touch sensors supported on or embedded within the touch panel (step **S2**).

For example, the touch panel may be the touch panel 1 for combined pressure and capacitance measurements using a common set of electrodes 4, 5, 6. Alternatively, the touch panel may have a layer including piezoelectric sensors stacked with a separate layer including capacitive touch sensors.

Based on the capacitance signals 19, a user interaction period is determined during which a user interaction with the touch panel occurs (step **S3**), for example, the period $t_0$ to $t_5$ (Figure 3).

If no user interaction is occurring (step **S3**), the next sampling of the pressure signals is obtained (step **S1**).

If a user interaction is occurring (step **S3**), processed pressure signals are generated based on the received pressure signals (step **S4**). For example, generating the processed pressure signals may include, for each piezoelectric sensor, subtracting a DC offset value from the received pressure signal. A DC offset value corresponding to each piezoelectric sensor may be initialised after a warm-up period has elapsed following switching on the touch panel. The initial DC offset value is based on the received pressure signals in the absence of a user interaction, for example, based on the mean, median, mode or range of the pressure signals.

Optionally, an additional re-calibration step may be used. For example, for each piezoelectric sensor, the system 13 may maintain a regression buffer of received pressure signal 18 values during periods when there are no user interactions. The gradient and variance of the values stored in the regression buffer may be determined, and in response to the gradient and variance being less than predetermined threshold values, the DC offset value may be updated based on the values stored in the regression buffer. For example, the DC offset value may be corrected based on the mean, median, mode or range of the values stored in the regression buffer.

Generating processed pressure signals may also include filtering the received pressure signals 18.

It is determined whether the received signals correspond to the first sampling of a newly commenced user interaction (step **S5**), and upon commencing a new user interaction a state register is initialised to a first state value $S_0$ (step **S6**).

If the received signals 18, 19 do not correspond to the first sampling of a newly commenced user interaction (step **S5**), the state register value may be updated (step **S7**). The user interaction transitions between state register values in dependence upon the current state register value and one or more pressure signal properties. Pressure signal properties may include one or more of a signal value, a signal gradient, a signal variance or standard deviation, a signal range, a signal minimum, a signal maximum, a time elapsed since the start of the user interaction period, a time elapsed since the state register value was changed, a time elapsed since detecting a peak in the pressure signal, and so forth. Pressure signal properties may include comparing a signal value, a signal gradient, a signal variance or standard deviation, a signal range, a signal minimum or a signal maximum against one or more corresponding predetermined thresholds or ranges.

In one example, the state register may be set to one of four values $S_0$, $S_1$, $S_2$ or $S_3$. The state register may be changed from the first state value $S_0$ to the second state value $S_1$ in response to a time elapsed since the start of the user interaction exceeding a minimum duration and the processed pressure signal having a sign corresponding to an increasing force. The state register may be changed from the second state value $S_1$ to the third state value $S_2$ in response to the processed pressure signal having a sign corresponding to a decreasing force. The state register may be changed from the third state value $S_2$ to the fourth state value $S_3$ in response to the processed pressure signal having a signal gradient below a signal gradient threshold.

Although in this example the transitions between the four states $S_0$, $S_1$, $S_2$, $S_3$ are linear, the method of allowing state transitions to depend also on the present value of the state register supports hierarchical, non-linear and/or branching sequences of values for the state register. This may allow reliability of pressure signal processing to be improved without sacrificing sensitivity, because the behaviour of signal processing may be made highly dependent on the prevailing conditions of a user interaction.

Measurements of the force applied to each of the plurality of piezoelectric sensors by the user interaction are updated (step **S8**). During the user interaction, the forces are measured by conditionally integrating the corresponding processed pressure signals according to the value of the state register corresponding to the user interaction. The integrating may be implemented using numerical means such as, for example, simple summation, application of the trapezium rule, and so forth.

In an example for which the state register may be set to one of four values $S_0$, $S_1$, $S_2$ or $S_3$, each value of the state register $S_0$, $S_1$, $S_2$, $S_3$ may be set to correspond to different behaviour for integrating the processed pressure values.

For example, if the state register corresponds to the first state value $S_0$, processed pressure signal values having a sign corresponding to an increasing force maybe integrated and processed pressure signal values corresponding to a decreasing force may be not integrated. If the state register corresponds to the second state value $S_1$, all processed pressure signal values maybe integrated. If the state register corresponds to the third state value $S_2$, processed pressure signal values may be not integrated. If the state register corresponds to the fourth state value $S_4$, processed pressure signal values which exceed a noise threshold may be integrated whilst processed pressure signal values which do not exceed the noise threshold may be not integrated.

Whilst the touch panel system continues to operate (step **S9**), the next sampling of the pressure signals is obtained (step **S1**).

In this way, since the transitions between state register values depend also upon the current value of the state register, pressure signals may be processed in a more responsive manner, which may enable improvements in the reliability of the measured forces.

State register values may be set separately for each of the plurality of piezoelectric sensors. Alternatively, state register values may be set for each user interaction, so that set of adjacent piezoelectric sensors may use a common state register when they are all influenced by the same user interaction.

The method supports multiple, concurrent user interactions with a touch panel.

Referring now in particular to Figures 5 and 6, application of one implementation of the method to the measured pressure signal 24 shown in Figure 5 will be described.

As the user interaction progresses, the pressure signal processing module 15 updates a state register value between at least 4 distinguishable states, $S_0$, $S_1$, $S_2$ and $S_4$ (step **S7**). The boundaries of and transitions between states $S_0$, $S_1$, $S_2$ and $S_3$ are indicated in Figures 5 and 6 for reference. In this example, the state register may be set to one or four values $S_0$, $S_1$, $S_2$ and $S_4$. The measured piezoelectric pressure signal 24 values P(t) are processed according to the methods of the present specification to determine a processed pressure signal 25 (step **S4**), which is in turn used to measure the output force 26 (step **S8**). In Figure 6, the output force 26 is plotted against the secondary y-axis.

When the user interaction begins, which is determined based on the capacitance information 20 (step **S3**), the user interaction is initialised into a first, or initial state $S_0$ (step **S6**). In this example, during the initial state $S_0$, the pressure signal 24 values P(t) are not used unless they have the appropriate sign for increasing load on the touch panel 1. For the examples shown in Figures 5 and 6, the appropriate sign is negative, but in other examples the pressure signal 24 values P(t) may increase in response to increasing applied force. In practice, this condition may be applied by generating processed pressure signal 25 values P*(t), according to:

$$P^*(t) = \begin{cases} P(t) & \text{if} & \text{sign}[P(t)] \\ 0 & \text{otherwise} \end{cases} \qquad (1)$$

During the initial state $S_0$, an output force signal F(t) is obtained for each new sampling of the pressure signal 24 value P(t) by adding the corresponding processed signal 25 value P*(t) to the previous value of the output force signal, i.e. F(t) = F(t-1) + P*(t) (step **S8**). Since the processed signal 25 value P*(t) is set to zero when the pressure signal 24 value P(t) has the wrong sign for increasing applied force, these values do not contribute to the output force signal F(t).

Note that the output force signal 26 values F(t) are proportional to applied force, but to obtain an estimated measurement of absolute applied force, the measured values F(t) will need to be multiplied by corresponding scale factors. The scale factor may be obtained from calibration experiments using known applied force profiles. Scale factors may further depend on the location of a user interaction with the touch panel 1.

The transition to a second, primary loading, state $S_1$ may occur once a predetermined duration has elapsed since the start of the user interaction (step **S7**). The start of the user interaction is known with good accuracy from the capacitance information 20. During the primary loading state $S_1$, all sample pressure signal 24 values P(t) may be used unconditionally, i.e. the processed signal may be set as P*(t) = P(t) (step **S4**) and the output force signal F(t) may updated as F(t) = F(t-1) + P*(t) (step **S8**).

The transition to a third, or settling, state $S_2$ may occur when the pressure signal 24 values P(t) change sign, or when the pressure signal processing module 15 has conclusively detected the initial loading peak $P_1$ (step **S7**). In the example shown in Figures 5 and 6, the state transition $S_1$ to $S_2$ occurs because the pressure signal 24 values P(t) have changed sign from negative to positive. Of course, in other examples where increasing the applied force causes the pressure signal 24 to increase, the transition is detected in the opposite direction. An example process for determining the approximate time and value of initial peak $P_1$ is described hereinafter. During the settling state $S_2$, the pressure signal 24 values P(t) may be not used (step **S8**), for example by setting the processed signal values P*(t) as P*(t)=o (step **S4**). Thus, in Figures 5 and 6, it may be observed that in this example the processed signal P*(t) clamps to zero during the false overshoot peak $P_2$.

The transition to a fourth, or stable state $S_3$ may occur once the pressure signal 24 values P(t) have stabilised at a DC offset $P_{off}$ (step **S7**). In general, the DC offset $P_{off}$ may change slowly with time and/or following each loading/unloading peak of the pressure signal 24 values P(t). In some examples the pressure signal processing module 15 maintains a buffer of a number, $N_{buff}$ of previous pressure samples $\{P(t), P(t-1), ..., P(t-N_{buff}+1)\}$, in which context t, t-1, t-$N_{buff}$ are integers indicating sampling times. When each new pressure sample P(t) is obtained, the pressure signal processing module 15 calculates a linear regression on the buffered samples $\{P(t), P(t-1), ..., P(t-N_{buff}+1)\}$. Once the magnitude of the slope, m, and the variance value, VAR, of the buffered pressure signal 24 samples $\{P(t), P(t-1), ..., P(t-N_{buff}+1)\}$ are below precalibrated thresholds $m_{stable}$, $VAR_{stable}$, the pressure signal processing module 15 updates the state register value to the stable state $S_3$ and sets the mean value of the buffered samples {P(t), P(t-1), ..., P(t-$N_{buff}$+1)} as a offset correction value $P_{cor}$ = mean({P(t), P(t-1), ..., P(t-$N_{buff}$+1)}).

During the stable state $S_3$, the processed signal 25 sample P*(t) may be set according to P*(t) = P(t) - $P_{cor}$ (step **S4**). The output force signal 26 values F(t) may then updated according to (step **S8**):

$$F(t) = \begin{cases} F(t-1) + P*(t) & if \quad |P*(t)| > P_{noise} \\ F(t-1) & if \quad |P*(t)| \leq P_{noise} \end{cases} \qquad (2)$$

In which $P_{noise}$ is a noise threshold. For example, $P_{noise}$ may be set to a multiple of the standard deviation of the pressure signal 24 values P(t) during a calibration period in which there are no user interactions. The noise threshold $P_{noise}$ may be set to a multiple of five time the standard deviation of the pressure signal 24 values P(t) recorded during a calibration period. The noise threshold $P_{noise}$ may be pre-set, or may be periodically updated during quiet periods in which there are no user interactions detected in the capacitive information 20.

Changes in user pressure may be captured during the stable state $S_3$ with high sensitivity, whether they are increases or decreases in applied force. In the example shown in Figures 5 and 6, the small peak $P_3$ corresponding to a slight reduction in applied pressure is detected and the output force signal 26 values F(t) are correspondingly decreased.

During the stable state $S_3$, the threshold for detecting a change in the force applied to the touch panel 1 may be set to a lower value than would be possible for a conventional gradient and value based conditional integration applied to an entire signal. This is because effects such as static discharge, initial offset $P_0$, overshoot offset $P_{off}$ and false peaks $P_2$ may screened out through the use of the other state register values $S_0$, $S_1$ and $S_2$. In this way, the methods of the present specification may allow improved reliability during and immediately after the initial contact of the user's digit or conductive stylus with the touch panel 1, as well as sensitive detection of relatively small user modulations of the applied force during the main part of a user interaction.

In practice, the required offset correction $P_{cor}$ may slowly drift whilst a user maintains constant pressure. Additionally, if a user substantially increases or decreases applied pressure, this may change the offset $P_{off}$ to which the piezoelectric pressure signal 24 values P(t) decay. However, the correction value $P_{cor}$ cannot simply be updated continuously whilst the buffer {P(t), P(t-1), ..., P(t-$N_{buff}$+1)} remains relatively flat (i.e. m < $m_{stable}$ and VAR < $VAR_{stable}$). If this was the case, any slight increase or decrease of the applied pressure would be continuously removed from the processed pressure 25 samples P*(t), and would therefore not be detected.

Instead, during the stable state $S_3$ the pressure signal processing module 15 may perform linear regression on the buffer {P(t), P(t-1), ..., P(t-$N_{buff}$+1)} after each new sampling P(t). Whilst the buffer {P(t), P(t-1), ..., P(t-$N_{buff}$+1)}) remains flat (i.e. m < $m_{stable}$ and VAR < $VAR_{stable}$), the mean value of the buffered samples is compared against the correction value $P_{cor}$ and, if the magnitude of the difference | mean({P(t), P(t-1), ..., P(t-$N_{buff}$+1)})-$P_{Cor}$|, is less than a threshold value $\Delta P_{cor}$, then the correction value $P_{cor}$ is unchanged. However, if the difference, |mean({P(t), P(t-1), ..., P(t-$N_{buff}$+1)})-$P_{cor}$|, exceeds the threshold value $\Delta P_{cor}$, then the correction value is updated to $P_{cor}$ = mean({P(t), P(t-1), ..., P(t-$N_{buff}$+1)}).

The value of the threshold $\Delta P_{cor}$ may vary for each touch panel 1 and system 13. A suitable value for a given touch panel 1 and system 13 may be obtained by measuring data corresponding to a selection of known calibration force profiles. In a simple case, the threshold $\Delta P_{cor}$ maybe set according the largest drift observed over the duration of a known, static applied force. Alternatively, the measurements obtained using known calibration force profiles may be used to generate a training set for a fitting, using the deviation of the known and measured forces as a cost function.

The stable state $S_3$ ends at the end of the user interaction.

In some examples, described further hereinafter, it may be useful to make a distinction between user interactions which begin with a clear increase in pressure to the initial loading peak $P_1$, referred to herein as "hard" type user interactions, and other user interactions in which the pressure increases more gradually to the initial loading peak $P_1$, referred to herein as "soft" type user interactions. In some "soft" type user interactions, when applied force is increased very gradually, a well defined initial loading peak $P_1$ may not be observed. The extension of the method to include differentiated processing of "hard" and "soft" type user interactions is described hereinafter.

Example of implementing the method

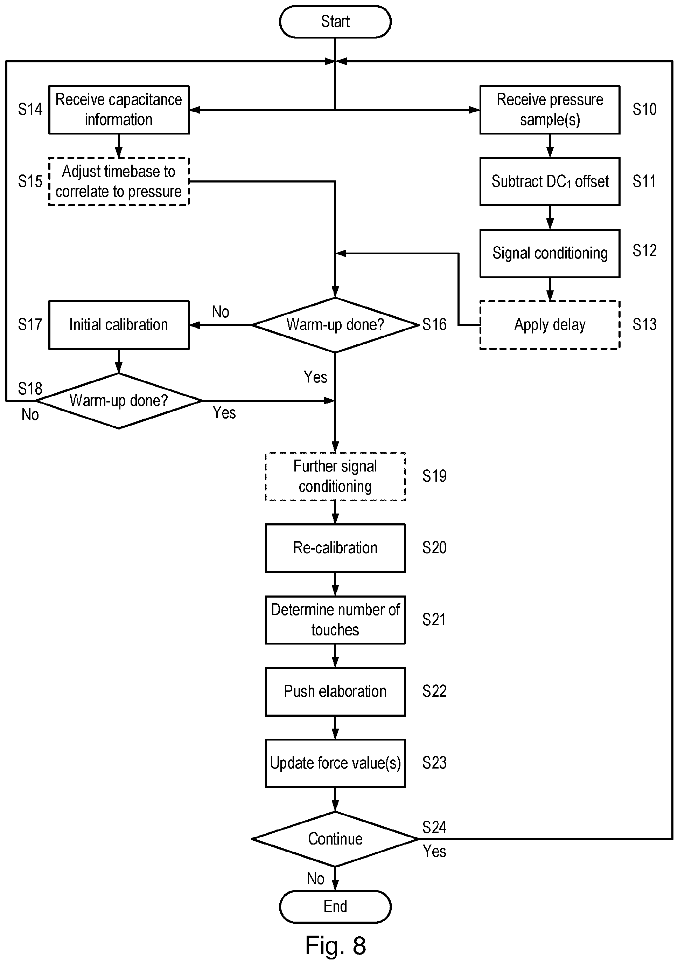

Referring also to Figure 8, a process flow diagram of an example processing chain for implementing a method according to the present specification is shown. The methods of the present specification are not limited to the steps illustrated in Figure 8 and subsequent Figures illustrating further details of particular signal processing steps.

The pressure signal processing module 15 receives pressure signal 18 values P(t) corresponding to the first and second sensing electrodes 5, 6 (step **S10**). The pressure signal 18 values P(t) for each first and second sensing electrodes 5, 6 may all be received concurrently. Alternatively, the pressure signal 18 values P(t) corresponding to the first and second sensing electrodes 5, 6 may be received sequentially as each pair of first and second electrodes 5, 6 is read out according to a predetermined or dynamically determined sequence. In general, one pressure signal 18 value P(t) is obtained for each first or second sensing electrode 5, 6 during each sampling period. For example, if there are a number N of first sensing electrodes 5 oriented as shown in Figures 1 and 2 and spaced in the second, y direction at coordinates $y_1$, $y_2$, ..., $y_N$, then the corresponding set of pressure samples at a sampling time t may be denoted as $\{P(t,y_1), P(t,y_2), ..., P(t,y_N)\}$. The set $\{P(t,y_1), P(t,y_2), ..., P(t,y_N)\}$ may be received by the pressure signal processing module 15 either concurrently or sequentially. Similarly, the pressure signal processing module 15 concurrently or sequentially receives a set of pressure samples $\{P(t,x_1), P(t,x_2),, ..., P(t,x_M)\}$ from a number M of second sensing electrodes 6 oriented as shown in Figures 1 and 2, and spaced in the first, x direction at coordinates $x_1$, $x_2$, ..., $x_M$.

When the pressure samples $\{P(t,y_1), P(t,y_2), ..., P(t,y_N)\}$, $\{P(t,x_1), P(t,x_2),, ..., P(t,x_M)\}$ are received concurrently, the meaning of the sampling time index t is clear, this represents the time at which the corresponding samples were obtained, t-1 is the previous sampling, t+1 the subsequent sampling, and so forth. When the pressure samples $\{P(t,y_1), P(t,y_2), ..., P(t,y_N)\}$, $\{P(t,x_1), P(t,x_2),, ..., P(t,x_M)\}$ are obtained sequentially, the index t refers to one cycle of reading out the sensing electrodes 5, 6. For example, the touch panel 1 is read out to obtain the sets of pressure samples $\{P(t,y_1). P(t,y_2), ..., P(t,y_N)\}$, $\{P(t,x_1), P(t,x_2), ..., P(t,x_M)\}$, and then when the scanning repeats, the subsequent sets of pressure samples $\{P(t-1,y_1), P(t+1,y_2), ..., P(t+1,y_N)\}$, $\{P(t+1,x_1), P(t+1,x_2), ..., P(t+1,x_M)\}$ are obtained, and so forth.

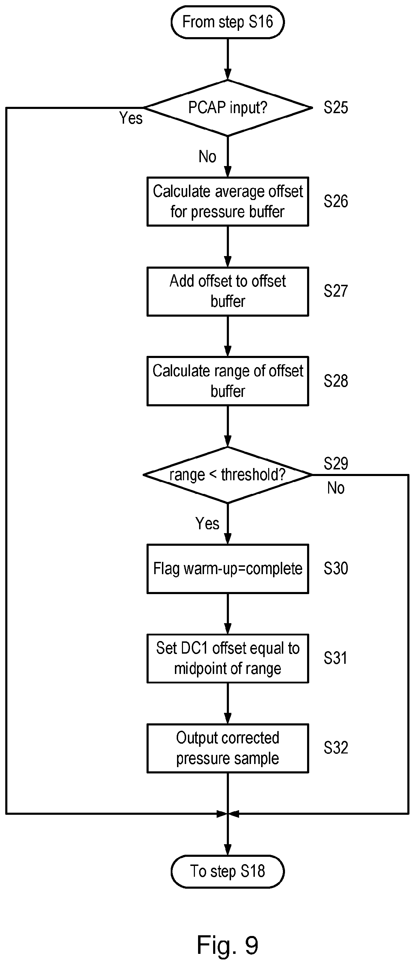

A coarse DC offset correction is performed by subtracting a first DC offset $DC_1$ from each pressure sample $\{P(t,y_1), P(t,y_2), ..., P(t,y_N)\}$, $\{P(t,x_1), P(t,x_2), ..., P(t,x_M)\}$ (step **S11**). In general, each sensing electrode 5, 6 may have a different first offset value, forming sets $\{DC_1(y_1), DC_1(y_2), ..., DC_1(y_N)\}$ and $\{DC_1(x_1), DC_1(x_2), ..., DC_1(x_M)\}$. The first offsets $DC_1$ are determined during a warm-up phase when the touch panel 1 and system 13 are powered up, and this process is described further hereinafter (Figure 9).

The pressure samples $\{P(t,y_1), P(t,y_2), ..., P(t,y_N)\}$, $\{P(t,x_1), P(t,x_2), ..., P(t,x_M)\}$ are processed according to a signal conditioning step which may include processes such as filtering, decimation, and so forth (step **S12**). A buffer of previously received pressure samples, $\{P(t-1,y_1), P(t-1,y_2), ..., P(t-1,y_N)\}$, $\{P(t-1,x_1), P(t-1,x_2), ..., P(t-1,x_M)\}$ may be maintained for use in applying time domain filters.

If necessary, the pressure samples $\{P(t,y_1), P(t,y_2), ..., P(t,y_N)\}$, $\{P(t,x_1), P(t,x_2), ..., P(t,x_M)\}$ are buffered and delayed until synchronised with the received capacitance information 20 (step **S13**). The capacitance information 20 is used by the methods of the present specification, for example, to indicate the number, start times, end times, and locations of one or more user interactions 27 (Figure 13). However, there may often be a propagation and processing delay before the capacitance information 20 is available from the capacitive signal processing module 16. The delay applied to the pressure samples $\{P(t,y_1), P(t,y_2), ..., P(t,y_N)\}$, $\{P(t,x_1), P(t,x_2),, ..., P(t,x_M)\}$ is determined to enable resynchronisation with the capacitance information 20 for onward processing. The delaying (step **S13**) may not be necessary if the propagation and processing delay before the capacitance information 20 is available is less than one sampling period of the touch panel 1.

As well as receiving the pressure signals 18, the pressure signal processing module 16 also receives the capacitance information 20 which is output from the capacitive signal processing module 16 (step **S14**). The capacitance information 20 includes information about whether user interactions 27 (Figure 13) have been detected by the capacitive signal processing module 16, and a corresponding x-y coordinate on the touch panel for each detected user interaction. Preferably, the pressure signal processing module 16 supports multi-touch detection of two or more user interactions 27 (Figure 13) concurrently.

Optionally, if the sampling periods of the capacitance information 20 and the sets of pressure samples $\{P(t,y_1), P(t,y_2), ..., P(t,y_N)\}$, $\{P(t,x_1, P(t,x_2), ..., P(t,x_M)\}$ are not equal, the timebase for the capacitance information 20 may be converted to match that of the pressure samples $\{P(t,y_1, P(t,y_2), ..., P(t,y_N)\}$, $\{P(t,x_1), P(t,x_2), ..., P(t,x_M)\}$ (step S15).

The pressure signal processing module 15 checks whether a warm-up period following initially powering up the touch panel 1 and system 13 has finished (step S16). The end of the warm-up period need not occur a fixed or predetermined period after switching on the touch panel 1 and system 13. Instead, the pressure signal processing module 15 sets a warm-up flag to a value of "complete" when the calibration procedure (step S17) has determined that the touch panel 1 and system 13 have reached stable operation.

The pressure signal processing module 15 performs an initial calibration procedure to determine whether or not the pressure samples $\{P(t,y_1), P(t,y_2), ..., P(t,y_N)\}$, $\{P(t,x_1), P(t,x_2), ..., P(t,x_M)\}$ have reached a stable DC offset value (step S17). If the pressure samples $\{P(t,y_1), P(t,y_2), ..., P(t,y_N)\}$, $\{P(t,x_1), P(t,x_2), ..., P(t,x_M)\}$ have reached a stable DC offset value, the warm-up flag is set to "complete". The pressure samples $\{P(t,y_1), P(t,y_2), ..., P(t,y_N)\}$, $\{P(t,x_1), P(t,x_2), ..., P(t,x_M)\}$ corresponding to all of the sensing electrodes 5, 6 should reach a stable DC offset value before the warm-up period is flagged as "complete". Once this condition has been met for all sensing electrodes 5, 6, the corresponding sets of first DC offset values $\{DC_1(y_1), DC_1(y_2), ..., DC_1(y_N)\}$ and $\{DC_1(x_1), DC_1(x_2), ..., DC_1(x_M)\}$ are obtained. An example of the initial calibration procedure is explained in further detail hereinafter (see Figure 9).

If the warm-up flag is set to "complete" (step **S18)**, onward processing of the current sets of pressure samples

$\{P(t,y_1), P(t,y_2), ..., P(t,y_N)\}$, $\{P(t,x_1, P(t,x_2), ..., P(t,x_M)\}$ is carried out **(step S19).** Otherwise, the pressure signal processing module 15 obtains the next sets of pressure samples $\{P(t+1,y_1), P(t+1,y_2), ..., P(t+1,y_N)\}$, $\{P(t+1,x_1), P(t+1,x_2), ..., P(t+1,x_M)\}$ (step **S10)** and capacitance information (step **S14).**

Optionally, further signal conditioning may be applied to the pressure samples $\{P(t,y_1), P(t,y2), ..., P(t,y_N)\}$, $\{P(t,x_1), P(t,x_2), ..., P(t,x_M)\}$ (step **S19).** For example, a moving average filter may be applied. A buffer of previously received pressure samples, $\{P(t-1,y_1), P(t-1,y_2), ..., P(t-1,y_N)\}$, $\{P(t-1,x_1), P(t-1,x_2), ..., P(t-1,x_M)\}$ may be maintained for use in applying filters. Additionally or alternatively, the further signal conditioning maybe performed at a different point of the process (e.g. between step **S20** and step **S21).**

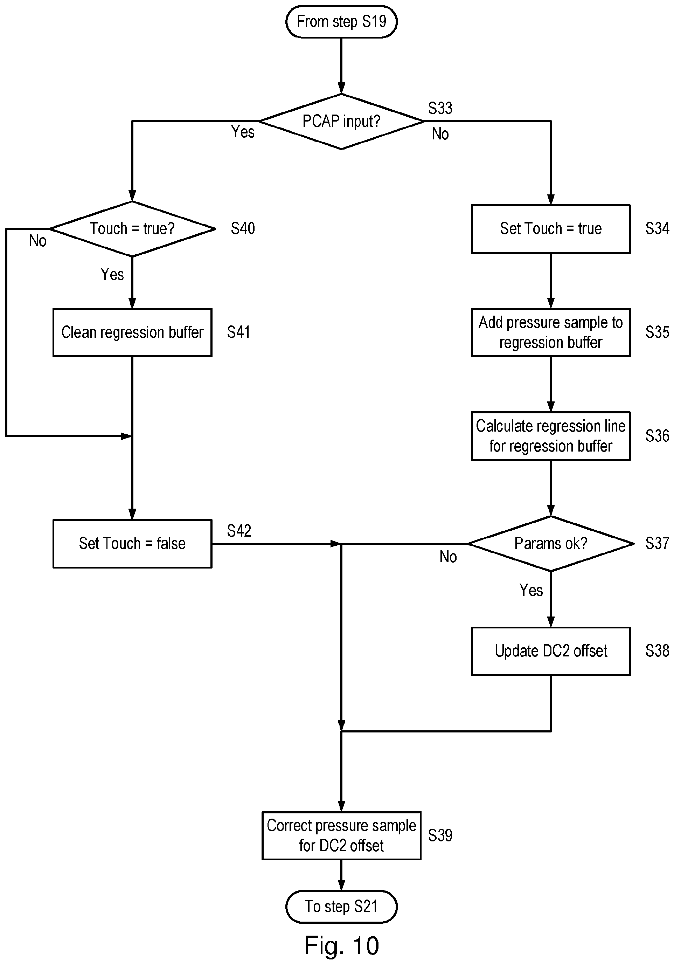

The first DC offsets $DC_1$ are accurate following the initial calibration, however, as explained hereinbefore the DC offsets for the pressure signals 18 may vary slightly over time and may also change following or during user interactions 27 (Figure 13). During idle periods when there are no user interactions 27 (Figure 13) detected from the capacitance information 20, a re-calibration process is conducted to determine an additional second, or fine, DC offset value $DC_2$ (step **S20).** The second DC offset values $DC_2$ are subtracted from each pressure sample $\{P(t,y_1), P(t,y_2), ..., P(t,y_N)\}$, $\{P(t,x_1, P(t,x_2), ..., P(t,x_M)\}$. In general, each sensing electrode 5, 6 may correspond to a different second offset value, forming sets $\{DC_2(y_1), DC_2(y_2), ..., DC_2(y_N)\}$ and $\{DC_2(x_1), DC_2(x_2), ..., DC_2(x_M)\}$. An example of a re-calibration process is further described hereinafter (Figure 10).

Based on the capacitance information 20, a number $N_{touch}$ of active user interactions 27 (Figure 13) is determined (step **S21).** The maximum number of concurrently active user interactions 27 (Figure 13) depends on the capabilities of the capacitive signal processing module 16 and may be, for example, between one and ten user interactions 27 (Figure 13).

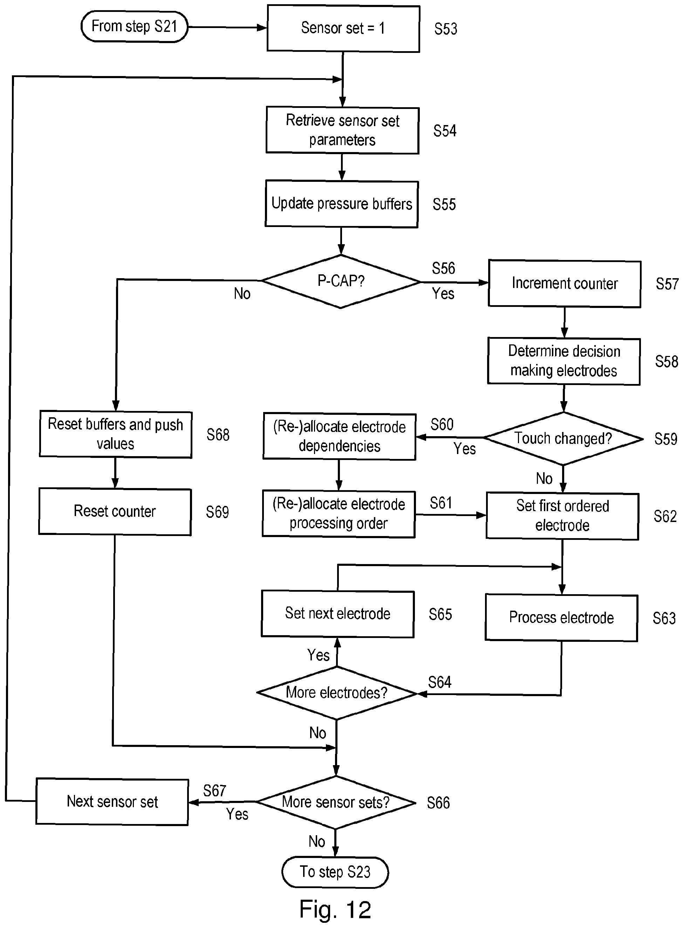

The current pressure samples $\{P(t,y_1), P(t,y_2), ..., P(t,y_N)\}$, $\{P(t,x_1), P(t,x_2), ..., P(t,x_M)\}$, and buffered, previously received pressure samples, $\{P(t-1,y_1), P(t-1,y_2), ..., P(t-1,y_N)\}$, $\{P(t-i,x_i), P(t-1,x_2), ..., P(t-1,x_M)\}$, and so forth, are analyse to determine state register values $S_0$, $S_1$, S2, $S_3$ (and optionally user interaction types) corresponding to each sensing electrode 5, 6 (step **S22).** The output processed pressure samples $\{P^*(t,y_1), P^*(t,y_2), ..., P^*(t,y_N)\}$, $\{P^*(t,x_1), P^*(t,x_2), ..., P^*(t,x_M)\}$ are also finalised. This process is referred to herein as "push elaboration", and an example is further described hereinafter (Figure 12).

Depending upon the state register value $S_0$, $S_1$, $S_2$, $S_3$ as described hereinbefore, measured output force 26 values F(t) are updated (step **S23).** The output forces 26 are measured separately for each first sensing electrode 5 forming a first set $\{F(t,y_1), F(t,y2), ..., F(t,y_N)\}$, and for each second sensing electrode 6 forming a second set $\{F(t,x_1), F(t,x_2), ..., F(t,x_M)\}$.

For as long as the force sensing capability of the touch panel 1 and system 13 is active (step **S24),** the pressure signal processing module 15 will continue by receiving the next sets of measured pressure samples $\{P(t,y_1), P(t,y_2), ..., P(t,y_N)\}$, $\{P(t,x_1), P(t,x_2), ..., P(t,x_M)\}$ (step **S10)** and the corresponding capacitance information 20 (step **S14).**

Initial calibration

Referring also to Figure 9, a process-flow diagram of an example initial calibration process (step **S17)** is shown.

The initial calibration process (step **S17)** is carried out when it is determined that the pressure signal processing module 15 has not yet flagged the warm-up stage as "complete" (step **S16).**

The capacitance information 20 is checked to determine whether the capacitive signal processing module 16 has detected any user interactions 27 (Figure 13) (step **S25).** If there are any user interactions 27 (Figure 13) occurring, the initial calibration is not performed (step **S18).** Although the calibration is performed separately for each sensing electrode 5, 6, the calibration requires that no user interactions 27 (Figure 13) be occurring anywhere on the touch panel 1, because plate bending of the touch panel 1 will in general apply strains all across the piezoelectric layer 9. This would interfere with obtaining data corresponding to zero-signal conditions.

Provided that there are no active user interactions 27 (Figure 13) (step **S25),** the pressure signal processing module 15 calculates, for each sensing electrode 5, 6, the mean value of a number, $N_{buf2}$, of the most recent pressure samples stored in a calibration buffer (step **S26).** For example, for the $n^{th}$ of N first sensing electrodes 5, the pressure signal processing module 15 calculates a corresponding offset value $OFF(t,y_n) = mean(\{P(t,y_n), P(t-1,y_n), ..., P(t-N_{buf2}+1,y_n)\})$. In this way, a set of offset values $\{OFF(t, y_1), OFF(t, y2), ..., OFF(t, y_N)\}$ corresponding to each of the first sensing electrodes 5 are obtained, and a set of offset values $\{OFF(t, x_1), OFF(t, x_2), ..., OFF(t, x_M)\}$ corresponding to each of the second sensing electrodes 6 are also obtained.

The offset values $\{OFF(t, y_1), OFF(t, y2), ..., OFF(t, y_N)\}$, $\{OFF(t, x_1), OFF(t, x_2), ..., OFF(t, x_M)\}$ are added to an offset buffer which holds a number, $N_{buf3}$, of the most recently obtained offset values (step **S27).**

For each sensing electrode 5, 6, the range of the corresponding offset values stored in the offset buffer is determined (step **S28).** For example, for the $n^{th}$ of N first sensing electrodes 5, the pressure signal processing module 15 calculates the range of the set of corresponding offset values as $RANGE(\{OFF(t, y_n), OFF(t-1, y_n), ..., OFF(t-N_{buf3}+1, y_n)\})$.

For each sensing electrode 5, 6, the corresponding range of the offset buffer is checked against a predetermined range threshold $P_{range}$ (step **S29**). If any of the determined ranges are greater than or equal to the predetermined range threshold $P_{range}$, then the warm-up stage is not yet complete and the warm-up flag is left set as "incomplete". The range threshold $P_{range}$ may be determined from calibration experiments in which the system 13 is powered on and data recorded until a stable state is reached. Statistics of the pressure signals 18 in the absence of user interactions 27 (Figure 13) may be used to determine the range threshold $P_{range}$. The range threshold $P_{range}$ may be set individually for each sensing electrode 5, 6.

However, if all of the determined ranges are less than the predetermined range threshold $P_{range}$, then the warm-up flag is set to a value of "complete" (step **S30**).

The $DC_1$ offset values corresponding to each sensing electrode 5, 6 are set based on the mid-points of the respective offset buffers (step **S31**). For example, the $DC_1$ offset corresponding to the $n^{th}$ of N first sensing electrodes 5, is calculated as $DC_1(y_n) = 0.5*($ MAX($\{$OFF(t, $y_n$), OFF(t-1, $y_n$), ..., OFF(t-$N_{buf3}$+1, $y_n$)$\}$) + MIN($\{$OFF(t, $y_n$), OFF(t-1, $y_n$), ..., OFF(t-$N_{buf3}$+1, $y_n$)$\}$)), and so forth for each other sensing electrode 5, 6.

The pressure samples $\{$P(t,$y_1$), P(t,$y_2$), ..., P(t,$y_N$)$\}$, (P(t,$x_1$), P(t,$x_2$), ..., P(t,$x_M$)$\}$ are each adjusted for DC offset by subtracting the respective $DC_1$ offset values $\{DC_1(y_1), DC_1(y_2), ..., DC_1(y_N)\}$, $\{DC_1(x_1), DC_1(x_2), ..., DC_1(x_M)\}$ (step **S32**). The terminology of, for example, P(t,$y_n$) is also used to refer to the pressure samples following adjustment for $DC_1$ offset.

First re-calibration process

Referring also to Figure 10, a process-flow diagram of a first example re-calibration process (step **S20**) is shown.

The capacitance information 20 is checked to determine whether the capacitive signal processing module 16 has detected any user interactions 27 (Figure 13) (step **S33**). Although the re-calibration is performed separately for each sensing electrode 5, 6, the re-calibration requires that no user interactions 27 (Figure 13) be occurring anywhere on the touch panel 1, because plate bending of the touch panel will in general apply strains across the piezoelectric layer 9. This would interfere with obtaining data corresponding to zero-signal conditions.

Provided that there are no active user interactions 27 (Figure 13) (step **S33**), the pressure signal processing module 15 sets a touch flag to a value of "true" (step **S34**) and adds the sets of pressure samples $\{$P(t,$y_1$), P(t,$y_2$), ..., P(t,$y_N$)$\}$, $\{$P(t,$x_1$), P(t,$x_2$), ..., P(t,$x_M$)$\}$ to a regression buffer which stores a number, $N_{buf4}$ of the most recently obtained pressure samples (step **S35**).

For each sensing electrode 5, 6, a linear regression line is calculated for the corresponding pressure samples stored in the regression buffer (step **S36**). The regression line is calculated conditionally upon the regression buffer having been filled. For example, for the $n^{th}$ of N first sensing electrodes 5, once the regression buffer has $N_{buf4}$ prior samples stored, the pressure signal processing module 15 calculates a regression line for the $n^{th}$ of N first sensing electrodes 5 using set of pressure samples $\{$P(t,$y_n$), P(t-1,$y_n$), ..., P(t-$N_{buf4}$+1,$y_n$)$\}$.

The condition that the regression buffer be filled may be enforced in a number of ways. For example, a counter of the number of samples since the last user interaction 27 (Figure 13) was detected from the capacitance information 20 maybe used. Alternatively, the regression buffer maybe initially populated with undefined, e.g. "Inf or "NAN" (not-a-number) values, so that until all of the initial values have been overwritten with real data, the regression analysis will not return numeric values, allowing simple detection of when the regression buffer has been filled. In this case, the regression buffer may be reset to this initial state (step **S41**) when a user interaction 27 (Figure 13) occurs.

For each sensing electrode 5, 6, the gradient, m, and variance, VAR, obtained from regression line analysis of the corresponding pressure samples are compared to a predetermined gradient threshold $m_{recal}$ and a predetermined variance threshold $VAR_{recal}$ for recalibration (step **S37**).

If the gradient m and variance VAR corresponding to a particular sensing electrode 5, 6 are both less than the respective gradient and variance thresholds $m_{recal}$, $VAR_{recal}$ (step **S37**), the corresponding $DC_2$ offset value is updated (step **S38**). For example, if for the $n^{th}$ of N first sensing electrodes 5 the conditions $m < m_{recal}$ and $VAR < VAR_{recal}$ are satisfied, the corresponding $DC_2$ offset, $DC_2(y_n)$ is updated to, for example P(t,$y_n$), or MEAN($\{$P(t,$y_n$), P(t-1,$y_n$), ..., P(t-$N_{buf4}$+1,$y_n$)$\}$), and so forth for each other sensing electrode 5, 6.

Unlike the initial calibration (step **S17**), the DC2 offsets need not all be updated at the same time. For example, if the regression lines corresponding to some sensing electrodes 5, 6 satisfy the gradient and variance thresholds, then the corresponding $DC_2$ offsets will be updated, and the remaining DC2 offsets will not be updated.

The pressure samples $\{$P(t,$y_1$), P(t,$y_2$), ..., P(t,$y_N$)$\}$, $\{$P(t,$x_1$), P(t,$x_2$), ..., P(t,$x_M$)$\}$ are each adjusted by subtracting the respective $DC_2$ offset values $\{DC_2(y_1), DC_2(y_2), ..., DC_2(y_N)\}$, $\{DC_2(x_1), DC_2(x_2), ..., DC_2(x_M)\}$ (step **S39**). If any of the DC2 offsets were not updated (step **S38**), then the previous DC2 offsets are used. All of the DC2 offsets are initialised to zero when the touch panel 1 and system 13 are powered up.

The terminology of, for example, P(t,$y_n$) is also used to refer to the pressure samples following adjustment for DC2 offset.

If active user interactions 27 (Figure 13) are determined from the capacitance information 20 (step **S33)**, it is checked whether the touch flag has a value of "true" (step **S40)**.

If the touch flag has a value of "true" (step **S40)**, the regression buffer is cleaned (step **S41)**. The regression buffer may be reset to all zeros, for example when a counter is used to determine when the regression buffer is full. Alternatively, as described hereinbefore, the regression buffer may cleaned by resetting all the stored values to "Inf" or "NAN" undefined values. Most computer programming or scripting languages include support for an undefined value, in order to permit support for divide by zero errors and so forth.

The touch flag is set to a value of "false" (step **S42)**, and the pressure samples $\{P(t,y_1). P(t,y_2), ..., P(t,y_N)\}$, $\{P(t,x_1), P(t,x_2), ..., P(t,x_M)\}$ are each adjusted by subtracting the respective $DC_2$ offset values $\{DC_2(y_1), DC_2(y_2), ..., DC_2(y_N)\}$, $IDC_2(x_1), DC_2(x_2), ..., DC_2(X_M)\}$ (step **S39)**.

The overall effect of steps **S33, S34, S40** and **S42** is that the touch flag will take a value of "true" when there are no user interactions, and that once the first sample of a new user interaction is received, the touch flag is reset to a value of "false" and the regression buffer is cleaned.

The continuous re-calibration of the $DC_2$ offsets during quiet periods of the touch panel 1 when there are no user interactions 27 (Figure 13) maintains the accuracy of the method against drifts in the DC offset over time.

Second re-calibration process

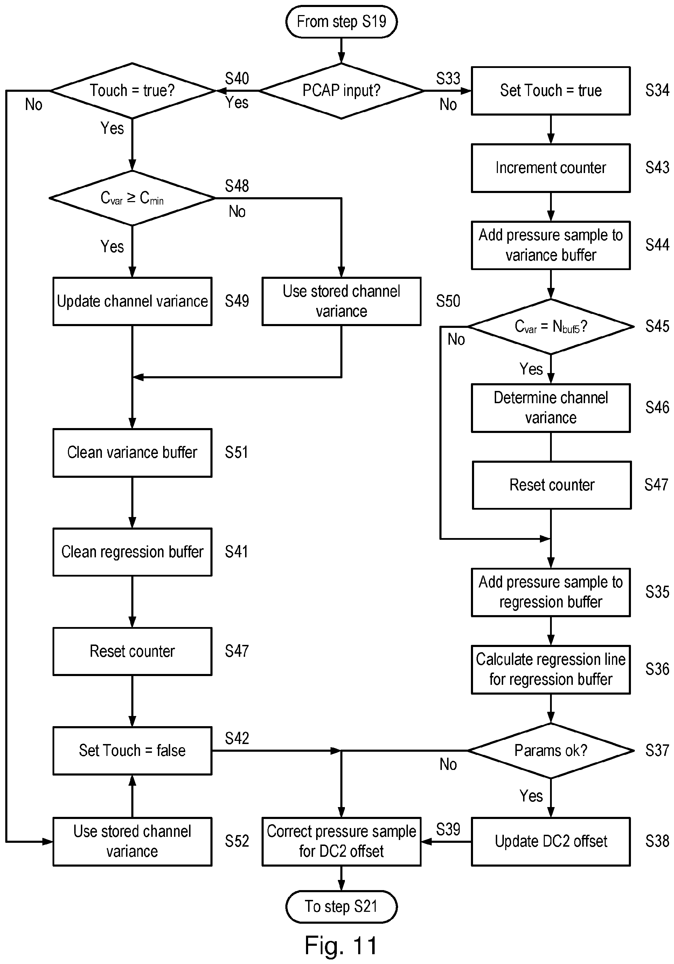

Referring also to Figure 11, a process-flow diagram of a second example re-calibration process (step **S20)** is shown.

The second example re-calibration process (step **S20)** includes all the steps of the first example re-calibration process (step **S20),** and additional steps which are directed to tracking the variance of signals corresponding to each sensing electrode 5, 6. This information may be useful for estimating the quality of measurements corresponding to each sensing electrode 5, 6, which is used in some examples of the method to assist in assigning decision making channels. Steps of the second re-calibration method which are the same as the first re-calibration method have the same numbering.

The presence of any active user interactions 27 (Figure 13) is determined using the capacitance information (step **S33)** and, if there are no user interactions 27 (Figure 13), the touch flag is set to a value of "true" (step **S34)** as described hereinbefore.

A counter, $C_{var}$ is incremented by one (step **S43)**. The counter $C_{var}$ is reset to zero whenever a user interaction 27 (Figure 13) is first detected (step **S47)**.

The pressure signal processing module 15 adds the sets of pressure samples $\{P(t,y_1), P(t,y_2), ..., P(t,y_N)\}$, $\{P(t,x_1), P(t,x_2), ..., P(t,x_M)\}$ to a variance buffer which stores up to a number, $N_{buf5}$ of the most recently obtained pressure samples (step **S44)**.

The pressure signal processing module 15 checks whether the counter, $C_{var}$, is equal to the variance buffer length $N_{buf5}$ (step **S45)**. If it is, a temporary channel variance, $VAR_{temp}$ is calculated based on the filled variance buffer (step **S46)**. For example, for the $n^{th}$ of N first sensing electrodes 5, the pressure signal processing module 15 measures the variance of the set of pressure samples $\{P(t,y_n), P(t-1,y_n), ..., P(t-N_{buf5}+1,y_n)\}$. In general, the channel variance corresponding to each sensing electrode 5, 6 is tracked individually, so that the measured variances form sets $\{VAR_{temp}(y_1), VAR_{temp}(y_2), ..., VAR_{temp}(y_N)\}$, $\{VAR_{temp}(x_1), VAR_{temp}(x_2), ..., VAR_{temp}(x_M)\}$.

The counter $C_{var}$ is then reset to zero (step **S47)**. In this way, the temporary channel variance, $VAR_{temp}$ is updated every $N_{buf5}$ samples to track the variance corresponding to each sensing electrode 5, 6.

The $DC_2$ offset checking and updating procedure proceeds as described hereinbefore (steps **S35, S36, S37** and **S38)**.

If a user interaction 27 (Figure 13) is detected in the capacitance information 20 (step **S33),** then the pressure signal processing module 15 checks whether the touch flag is set to a value of "true", as described hereinbefore (step **S40)**.

If the touch flag is equal to "true" (step **S40)**, i.e. if this is the first sample corresponding to a new user interaction 27 (Figure 13), the pressure signal processing module 15 determines whether the counter $C_{var}$ is equal to or exceeds a minimum value $C_{min}$ (step **S48)**. If the counter satisfies $C_{var} < C_{min}$, then the set of most recently obtained channel variances $(VAR_{temp}(y_1), VAR_{temp}(y_2), ..., VAR_{temp}(y_N)\}$, $\{VAR_{temp}(x_1), VAR_{temp}(x_2), ..., VAR_{temp}(x_M)\}$ are set as output variances $\{VAR_{out}(y_1), VAR_{out}(y_2), ..., VAR_{out}(y_N)\}$, $\{VAR_{out}(x_1), VAR_{out}(x_2), ..., VAR_{out}(x_M)\}$ corresponding to the newly begun user interaction 27 (Figure 13) (step **S50)**. In this way, if the gap between a first and a second user interaction 27 (Figure 13) is less than $C_{min}$, the most recently obtained channel variance, prior to the first user interaction 27 (Figure 13), is also assigned to the second user interaction 27 (Figure 13).

However, if the counter $C_{var} \geq C_{min}$ (step **S48),** then the output variances $\{VAR_{out}(y_1), VAR_{out}(y_2), ..., VAR_{out}(y_N)\}$, $\{VAR_{out}(x_1), VAR_{out}(x_2), ..., VAR_{out}(x_M)\}$ corresponding to each sensing electrode 5, 6 are determined as the weighted average of the most recently obtained channel variances $\{VAR_{temp}(y_1), VAR_{temp}(y_2), ..., VAR_{temp}(y_N)\}$, $\{VAR_{temp}(x_1), VAR_{temp}(x_2), ..., VAR_{temp}(x_M)\}$ and the variances of the currently filled portion of the variance buffer (step **S49)**. For example, for the $n^{th}$ of N first sensing electrodes 5, the pressure signal processing module 15 obtains the

corresponding output variance $VAR_{out}(y_n)$ as a weighted sum of $VAR_{temp}(y_n)$ and the variance of the set of pressure samples $\{P(t,y_n), P(t-1,y_n), ..., P(t-C_{var}+1,y_n)\}$, and so forth for each other sensing electrode 5, 6. The sum is weighted according to the number of samples used to obtain the variance values, i.e. $N_{buf5}$ and $C_{var}$. In this way, the most accurate and temporal measurement of variance leading up to a new user interaction 27 (Figure 13) may be obtained.

The output variance values $\{VAR_{out}(y_1), VAR_{out}(y_2), ..., VAR_{out}(y_N)\}$, $\{VAR_{out}(x_1), VAR_{out}(x_2), ..., VAR_{out}(x_M)\}$ corresponding to each sensing electrode 5, 6 may, in some examples, contribute to a quality metric of the respective sensing electrodes 5, 6. Such quality metrics may be used to help determine the key, or decision making, sensing electrodes 5, 6 for measuring sets of output forces $\{F(t,y_1), F(t,y_2), ..., F(t,y_N)\}$, $\{F(t,x_1), F(t,x2), ..., F(t,x_N)\}$. The functions of assigning and using key, or decision making, sensing electrodes 5, 6 are described hereinafter.

For the first sample of a new user interaction 27 (Figure 13), the variance buffer is cleaned by re-initialising all values to zero (step **S51**), the regression buffer is cleaned as described hereinbefore (step **S41**), the counter $C_{var}$ is reset to zero (step **S47**), and the touch flag is set to a value of "false" as described hereinbefore (step **S42**)

When a user interaction 27 (Figure 13) is detected from the capacitance information 20 (step **S33**) and the touch flag has a value of "false" (step **S40**), i.e. for the second and subsequent samplings of a user interaction, the most recent values of output variances $\{VAR_{out}(y_1), VAR_{out}(y_2), ..., VAR_{out}(y_N)\}$, $\{VAR_{out}(x_1), VAR_{out}(x_2), ..., VAR_{out}(x_M)\}$ are re-used (step **S52**). In other words, the output variances $VAR_{out}$ determined when a user interaction begins are used throughout the entire user interaction 27 (Figure 13). This is because the underlying variance corresponding to each sensing electrode 5, 6 may be difficult to determine during a user interaction 27 (Figure 13) on account of pressure signals and/or additional noise sources associated with the user interaction 27 (Figure 13).

Push elaboration process

Referring also to Figure 12, a process-flow diagram of the process of determining the state register values $S_0$, $S_1$, $S_2$, $S_3$, the processed pressure values $\{P^*(t,y_1), P^*(t,y_2), ..., P^*(t,y_N)\}$, $\{P^*(t,x_1), P^*(t,x_2), ..., P^*(t,x_M)\}$, and optionally the type (hard or soft) of ongoing user interactions 27 (Figure 13) is shown. This process is referred to as a "push elaboration" process in the interests of brevity.

Following determination of the number of active user interactions (step **S21**), the push elaboration process commences (step **S22**).

The active sensor set is assigned to the first sensor set (step **S53**). In general, a touch panel 1 may include one, two or more distinct sets of sensing electrodes 5, 6. For example, in the touch panel 1 shown in Figures 1 and 2, the first sensing electrodes 5 form a y-set which measures forces in the y-direction and the second sensing electrodes 6 form an x-set which measures forces in the x-direction.

The physical parameters of the active sensor set are retrieved (step **S54**). For example, in the touch panel 1 shown in Figures 1 and 2 having a first, y-set of sensing electrodes 5 and a second, x-set of sensing electrodes 6, the spacing of the first electrodes 5 in the y-direction does not need to be equal to the spacing of the second electrodes 6 in the x-direction. The physical positions and spacing of the sensing electrodes 5, 6 are used to determine key or decision making electrodes 5, 6 (step **S58**).

The current set of pressure samples $\{P(t,y_1), P(t,y_2), ..., P(t,y_N)\}$, $\{P(t,x_1), P(t,x_2), ..., P(t,x_M)\}$ are added to a push elaboration pressure buffer holding a number $N_{buf6}$ of the most recently received pressure samples (step **S55**). For example, for the $n^{th}$ of N first sensing electrodes 5, the push elaboration pressure buffer holds the set of pressure samples $\{P(t,y_n), P(t-1,y_n), ..., P(t-N_{buf6}+1,y_n)\}$, and so forth for each other sensing electrode 5, 6.

The pressure signal processing module 15 determines whether any user interactions 27 (Figure 13) are occurring, based on the capacitance information 20 (step **S56**). Provided that at least one user interaction 27 (Figure 13) is occurring, a user interaction duration counter $C_{int}$ is incremented (step **S57**). The counter $C_{int}$ is incremented by unity.

An initial assignment of the key, or decision making, sensing electrodes 5', 6' is made based on the capacitance information 20 (step **S58**). In general, for each set of sensing electrodes 5, 6, the initial assignment of the decision making sensing electrodes 5', 6' comprises projecting the 2-D multi-touch data for one or more user interactions 27 (Figure 13) from the capacitance information 20 onto the physical locations of the respective set of electrodes, to determine the closest sensing electrodes 5, 6 to each active user interaction 27 (Figure 13). The closest sensing electrodes 5, 6 are more likely to have the strongest pressure signal, and consequently are initially selected as the decision making sensing electrode 5', 6'. However, the initial assignment may be subsequently altered if, for example, an adjacent channel is determined to have a superior quality. For example, the closest sensing electrode 5, 6 to a user interaction 27 (Figure 13) may have the strongest pressure signal, and also suffer the most from electrostatic discharge of the user's digit, so that an adjacent sensing electrode 5, 6 actually provides a better quality signal. When the sensing electrodes 5, 6 are arranged as x and y electrodes, as shown in Figures 1 and 2, the projection of the 2-D locations of user interactions onto the x-set or the y-set may result in a number of decision making electrode 5', 6' that is less than the number of active user interactions 27 (Figure 13).

Referring also to Figure 13 and 14, a process of making the initial assignment of the decision making sensing electrodes 5', 6' is illustrated for an example of four concurrent user interactions 27A, 27B, 27C, 27D.

In the example shown in Figures 13 and 14, there are N = 8 first sensing electrodes $5_1$, $5_2$, ..., $5_8$, spaced such that the locus of points closest to the $n^{th}$ first sensing electrode $5_n$ may be expressed as $y_{n-1} \leq y < y_n$, and corresponds to pressure sample $P(t, y_n)$. Similarly, there are M = 15 second sensing electrodes 61, 62, ..., $6_{15}$, spaced such that the locus of points closest to the $m^{th}$ second sensing electrode $6_m$ may be expressed as $x_{m-1} \leq x < x_m$, and corresponds to pressure sample $P(t, x_m)$.

Referring in particular to Figure 13, a first user interaction $27_A$, has centroid coordinates $x = x_A$, $y = y_A$, determined by the capacitive signal processing module 16 and included in the capacitance information 20. The centroid coordinates $x_A$, $y_A$ are such that $x_1 \leq x_A < x_2$ and $y2 \leq y_A < y_3$, i.e. the first user interaction $27_A$ is closest to the $3^{rd}$ y electrode $5_3$ and the $2^{nd}$ x electrode 62. Similarly, a second user interaction $27_B$ has centroid coordinates $X_5 \leq x_B < x_6$ and $y_5 \leq y_B < y_6$, a third user interaction $27_C$ has centroid coordinates $x_5 \leq x_C < x_6$ and $y_2 \leq y_C < y_3$, and a fourth user interaction $27_C$ has centroid coordinates $x_{11} \leq x_D < x_{12}$ and $y_3 \leq y_D < y_4$.

Referring in particular to Figure 14, when the centroid coordinates of the four user interactions $27_A$, $27_B$, 27C, $27_D$ are projected onto the x-axis, the second and third user interactions $27_B$, $27_C$ are not-unique. Both the second and the third user interactions $27_B$, $27_C$ correspond to the $6^{th}$ or x electrode $6_6$. Consequently, since decision making sensing electrodes 5', 6' should be unique, three of the x electrodes 6 are selected to be decision making electrodes 6', namely the $2^{nd}$ x electrode 62 corresponding to the first user interaction $27_A$, the $6^{th}$ x electrode $6_6$ corresponding to the second and third user interactions $27_B$, $27_C$, and the $12^{th}$ x electrode 612 corresponding to the fourth user interaction $27_D$.

Similarly, when the set of first, or y sensing electrodes $5_1$, $5_1$, ..., $5_8$ are processed, three decision making y electrode 5' are selected, namely the $3^{rd}$ y electrode $5_3$ corresponding to the first and third user interactions $27_A$, $27_C$, the $4^{th}$ y electrode $5_4$ corresponding to the fourth user interaction $27_D$, and the $6^{th}$ y electrode $5_6$ corresponding to the second user interaction $27_B$.

The pressure signal processing module 15 determines, based on the capacitance information 20, whether the status or pattern of the one or more user interactions 27 has altered since the previous sampling (step **S59**). The methods of the present specification process the samples corresponding to the decision making electrodes 5', 6' first, and the remaining, non-decision making electrodes 5, 6 are each assigned to depend on one or the decision making electrode 5', 6'. The status of the one or more user interactions 27 is determined to have been altered when the number or identity of decision making electrodes 5', 6' changes, for example, when a new user interaction 27 begins when a user contacts an additional digit to the touch panel 1. Alternatively, the status of the one or more user interactions 27 is altered when the number of user interactions decreases when a user removes a digit from the touch panel 1. Alternatively, the status of the one or more user interactions 27 is altered when one or more user interactions 27 has moved far enough that the corresponding centroid corresponds to a different sensing electrode 5, 6, and so forth.

When the status of the one or more user interactions 27 is determined to have been altered (step **S59),** the sensing electrode 5, 6 dependencies are allocated or re-allocated (depending on whether any user interactions 27 were in progress for the previous sample) (step **S60).** The non-decision making electrodes 5, 6 are each assigned to a decision making electrode 5', 6' based on proximity.

Referring also to Figure 15, one example of assigning electrode 5, 6 dependencies is shown.

The example shown in Figure 15 corresponds to the four user interactions $27_A$, $27_B$, $27_C$, $27_D$ shown in Figures 13 and 14. In a first iteration, It1, the decision making electrode 6' are assigned as 62 corresponding to $x_1 \leq x < x_2$, as $6_6$ corresponding to $x_5 \leq x < x_6$, and as 612 corresponding to $X_{11} = x < x_{12}$.

In a second iteration, It2, the electrodes $6_1$, $6_3$, $6_5$, $6_7$, $6_{11}$, $6_{13}$ immediately adjacent to the decision making electrodes 62, $6_6$, 612 are assigned to depend from the adjacent decision making electrodes 62, $6_6$, $6_{12}$. For example, the electrode $6_5$ corresponding to $x_4 \leq x < x_5$ and the electrode $6_7$ corresponding to $x_6 \leq x < x_7$ are both assigned to depend from the decision making electrode $6_6$ corresponding to $x_5 \leq x < x_6$.

Further iterations It3, It4, are carried out, and during each, unassigned electrodes 6 are assigned to depend from the same decision making channel 6' as their immediate neighbours, until all electrodes 6 have been assigned. Conflict may be resolved using any suitable rule such as, for example, assigning to the decision making electrode 6' which is numbered lower (as shown in Figure 15), or numbered higher, or by always assigning to the left or to the right in the event of conflict. The dependencies of the non-decision making first electrodes 5 are assigned in the same way.

Alternatively, an iterative process need not be used. Instead, all non-decision making electrodes 5, 6 may be assigned to depend from the most proximate decision making electrode 5', 6' in a single step, with conflicts resolved as described hereinbefore.

However the electrode dependencies are determined, an alternative for resolving conflicts is to use the precise centroid coordinates from the capacitance information 20 to determine which user interaction 27 is closest to an electrode 5, 6, then assign that electrode 5, 6 to depend from the corresponding decision making electrode 5', 6'. The centroid coordinates maybe more precise than the spacing of electrodes 5, 6, because of the standard position interpolation functions applied during conventional projected capacitive touch sensing.

The electrode processing order is allocated or reallocated (step **S61).** The decision making electrodes 5', 6' are processed first, followed by the non-decision making electrodes 5, 6 grouped according to which decision making electrode 5', 6' they depend from/are associated with.

For example, for the set of user interactions $27_A$, $27_B$, $27_C$, $27_D$ shown in Figures 13 to 15, the second electrodes 6 would be processed in the order $6_2$, $6_6$, $6_{12}$, corresponding to the decision making electrodes 6', followed by $6_1$, $6_3$, $6_4$ corresponding to the first decision making electrode 62, followed by $6_5$, $6_7$, $6_8$, $6_9$ corresponding to the second decision making electrode 66, followed by $6_{10}$, $6_{11}$, $6_{13}$, $6_{14}$, $6_{15}$ corresponding to the third decision making electrode 612.

If the state of the one or more user interactions is unchanged (step **S59**) or following (re-)ordering of the electrode processing order (step **S61**), the first electrode 5, 6 in the previous or new ordering is selected (step **S62**), and the respective pressure sample P(t) is processed to determine a corresponding state register value $S_0$, $S_1$, $S_2$, $S_3$ and processed pressure sample P*(t) (step **S63**). For example, when the $n^{th}$ of N first sensing electrodes is processed, the respective pressure sample $P(t, y_n)$ is processed to determine a corresponding state register value $S_0$, $S_1$, $S_2$, $S_3$ and a corresponding processed pressure sample $P^*(t, y_n)$.

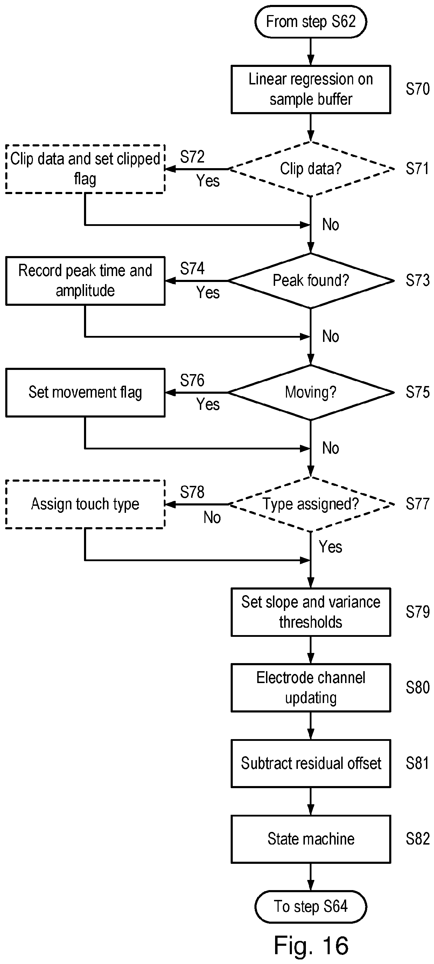

The processing of electrodes (step **S63**) is not limited to only the determination of the state register value $S_0$, $S_1$, $S_2$, $S_3$, and a number of optimisations may also be implemented during this step, including, for example, assignment of a touch type such as a "hard" or "soft" type. These optional processes are described in more detail with reference to Figures 16 to 23. However, only the determination of states $S_0$, $S_1$, $S_2$, $S_3$ and processed pressure samples $\{P^*(t,y_1), P^*(t,y_2), ..., P^*(t,y_N)\}$, $\{P^*(t,x_1), P^*(t,x_2), ..., P^*(t,x_M)\}$ are essential to the method of the present specification.

If there are further electrodes 5, 6 within the currently processed set (step **S64**), the next electrode in the current ordering is selected (step **S65**) and processed (step **S63**).

If there are no further electrodes 5, 6 within the currently processed set (step **S64**), it is checked whether there are additional sensor sets to process (step **S66**), and if there are not the method moves on to update the sets of output force values $\{F(t,y_1), F(t, y_2), ..., F(t,y_N)\}$, $\{F(t,x_1), F(t, x_2), ..., F(t,x_M)\}$ (step **S23**).

If there are additional sensor sets to process (step **S66**), the next sensor set is selected (step **S67**), the parameters for the next sensor set are retrieved (step **S54**) and the push elaboration process (step **S22**) is repeated for the new sensor set.

When there are no user interactions 27 occurring, as determined from the capacitance information 20 (step **S56**), all buffers and output force values $\{F(t,y_1), F(t, y_2), ..., F(t,y_N)\}$, $\{F(t,x_1), F(t, x_2), ..., F(t,x_M)\}$ are reset, for example to zero (step **S68**), and the counter $C_{int}$ is reset to zero (step **S69**).

Electrode processing

Referring also to Figure 16, a process-flow diagram of an example of the electrode processing (step **S63**) is shown. For the purposes of clear exposition, the process is described in relation to processing the $n^{th}$ of N first sensing electrodes 5, but is equally applicable to any of the sensing electrodes 5, 6.

A linear regression analysis is performed on the data for the currently processed electrode 5, 6 stored in the push elaboration pressure buffer (step **S70**). The slope, m, variance, VAR and mean value of the corresponding set of pressure samples $\{P(t,y_n), P(t-1,y_n), ..., P(t-N_{buf6}+1,y_n)\}$ are measured.

An optional data clipping process may be performed (steps **S71**, **S72**). The data clipping process maybe useful when a touch panel 1 and system 13 experience electrostatic discharge from a user's digit, which can cause excessively large positive or negative values of a pressure sample $P(t,y_n)$. The pressure sample $P(t, y_n)$ is checked against a clipping threshold $P_{clip}$ (step **S71**), and if the magnitude of the pressure sample $|P(t,yn)|$ exceeds the clipping threshold $P_{clip}$, the pressure sample $P(t, y_n)$ is set to equal the clipping threshold (step **S72**), according to:

$$P(t, y_n) \rightarrow \begin{cases} -P_{clip} & if & P(t, y_n) < -P_{clip} \\ P_{clip} & if & P(t, y_n) > P_{clip} \\ P(t, y_{n)} & if & |P(t, y_n)| \leq |P_{clip}| \end{cases} \qquad (3)$$

Additional, a data clipping flag is set to a value "clipped" for the electrode being processed (step **S72**). If the data clipping flag is equal to a value "clipped", then the process of updating the residual offset corresponding to the electrode (step **S80**) is omitted, to avoid false detection of a flat region if an electrodes data is being clipped. The data clipping flag may also be used to indicate that output force values $F(t,y_n)$ corresponding to the processed electrode may have low reliability. The clipping threshold $P_{clip}$ may be pre-calibrated, for example, by applying a known, upper bound calibration force to the touch panel 1 to determine a maximum probable pressure sample value $P(t,y_n)$. In general, the pressure signals 18 from across the touch panel 1 may vary as a function of position, because of plate bending of the touch panel 1 combined with the mechanical boundary conditions at the touch panel 1 boundary. Consequently, the clipping threshold $P_{clip}$ may be pre-calibrated separately for each sensing electrode 5, 6 , to obtain sets of clipping thresholds $\{P_{clip}(y_1), P_{clip}(y_2), ..., P_{clip}(y_N)\}$, $\{P_{clip}(x_1), P_{clip}(x_2), ..., P_{clip}(x_M)\}$.

The current pressure sample $P(t,y_n)$ is checked to consider whether the initial loading peak $P_1$ may be assigned (step **S73**). When a new user interaction 27 begins, a temporary peak value $P_{temp1}$ is set to zero. Each subsequently received pressure sample $P(t,y_n)$ is compared against the temporary peak value $P_{temp1}$. If the current sample $P(t,y_n)$ exceeds the temporary peak value $P_{temp1}$, then the temporary peak value is updated as $P_{temp1} = P(t,y_n)$. For example, if increasing applied force corresponds to negative values, then the temporary peak value $P_{temp1}$ is updated according to:

$$P_{temp1} \rightarrow \begin{cases} P(t,y_n) & if \quad P(t,y_n) < P_{temp1} \\ P_{temp1} & otherwise \end{cases} \qquad (4)$$

Whenever the temporary peak value $P_{temp1}$ is updated, a peak counter $C_{peak}$ is set to a positive integer value $N_{detect}$ and a peak time $t_{peak}$ is set to the time elapsed since the start of the user interaction 27, as determined from the capacitance information 20. A separate temporary peak value $P_{temp1}$, a peak counter $C_{peak}$, and peak time $t_{peak}$ are stored and tracked for each separate user interaction 27 detected by the capacitive signal processing module 16 and included in the capacitance information 20, and optionally for each sensing electrode 5, 6.

The peak counter $C_{peak}$ is initialised to a value of negative one when a news user interaction 27 commences, and is decremented by one each time that a new pressure sample $P(t,y_n)$ is received. Thus, the peak counter $C_{peak}$ is only positive for a period of $N_{detect}$ samples after updating the temporary peak value $P_{temp1}$. Once the peak counter $C_{peak}$ has counted down and is equal to $C_{peak}$ = o, the initial peak $P_1$ is confirmed by setting the temporary peak value $P_{temp1}$ and the corresponding peak time $t_{peak}$ to correspond to the initial loading peak $P_1$ amplitude and time respectively (step **S74**).

To avoid a failure to reach a determination of the initial loading peak $P_1$ when the pressure is increasing relatively slowly, if the temporary peak value $P_{temp1}$ is updated when the peak counter $C_{peak}$ satisfies the conditions $0 < C_{peak} \leq N_{detect}/2$, then the peak counter is set to $C_{peak}$ =1, so that a decision on the initial peak $P_1$ location is forced on the next sample when $C_{peak}$ is decremented to zero. This condition corresponds to detecting another peak very shortly, but not immediately, after the first peak. Consequently, the value $N_{detect}$ should be set such that half the countdown period is longer, preferably by several periods, than a typical fluctuation period of the underlying noise, so that the condition to force a decision on the initial peak $P_1$ location is not triggered except by fluctuations in the pressure signal 24. The fluctuation period of the underlying noise may be determined, for example, by obtaining a frequency spectrum of the pressure signal 24 in the absence of any user interactions.

Preferably, because the decision making electrodes 5',6' are processed first, when the non-decision making electrodes 5, 6 are processed, the step of determining whether a peak is found (step **S73**) may consist of checking whether the decision making electrode 5', 6' has found the initial loading peak $P_1$, i.e. if the peak found flag of the decision making electrode 5, 6 has value "true", then setting the time and amplitude for the non-decision making electrode being processed correspondingly (step **S74**). For example, for the example user interactions 27 shown in Figures 13 to 15, once the peak $P_1$ is found for the decision making electrode $6_2$, the time index $t_{peak}$ is set and the amplitude is $P(t_{peak},y_2)$. Then, for the non-decision making electrodes $6_1$, $6_{3,}$ $6_4$, the peak amplitude may be simply assigned based on the respective pressure samples at the peak time $t_{peak}$, i.e. the respective amplitudes maybe set as $P(t_{peak},y_1)$, $P(t_{peak},y_3)$, $P(t_{peak},y_4)$. In this way, substantial processing of the non-decision making electrodes 5, 6 may be skipped, increasing the speed of the push elaboration process (step **S22**) and thus reducing the latency in updating the measured output force values F(t). Accuracy may be preserved because the one or more decision making electrodes 5', 6' are likely to have the relatively strongest signals for the corresponding one or more user interactions 27.

In an optional extension of the method, each sensing electrode 5, 6 may be assigned a quality metric based on, for example, the variance corresponding to that sensing electrode 5, 6 prior to the corresponding user interaction 27 (see Figure 11), and/or a ratio of the present pressure sample $P(t,y_n)$ to that of the corresponding decision making electrode 5', 6'. For example, if the $n^{th}$ of N first sensing electrodes 5 is being processed and the corresponding decision making electrode 5' is the $p^{th}$ of N first sensing electrodes 5, then the ratio $P(t,y_n)/P(t,y_p)$ may be used as a quality metric. Of course, quality metrics are not limited to these examples, and other statistical measures of sensing electrode 5, 6 signal quality may be used. If the quality metric of a non-decision making electrode 5, 6 is less than a pre-calibrated threshold, then the non-decision making electrode 5, 6 may take the initial loading peak $P_1$ detection from the corresponding decision making electrode 5', 6'. However, if the quality metric of a non-decision making electrode 5, 6 exceeds the pre-calibrated threshold, then the non-decision making electrode 5, 6 may make an independent detection of the initial loading peak $P_1$. This may be advantageous when the non-decision making electrode 5, 6 detects the peak $P_1$ before the decision making electrode 5', 6', as this may indicate that the decision making electrode 5', 6' does not actually have the best signal, and the non-decision making electrode 5, 6 which detected the peak $P_1$ may be updated to be the decision making electrode 5', 6' for the corresponding user interaction 27.

Based on the capacitance information 20, the centroid coordinates of a user interaction 27 corresponding to the sensing electrode 5, 6 being processed are checked against prior values to determine differences $\Delta x$, $\Delta y$, and the user interaction is determined to be moving if the differences satisfy (step **S75**):

$$\sqrt{\Delta x^2 + \Delta y^2} > \Delta_{move} \qquad (5)$$

In which $\Delta_{move}$ is a pre-calibrated movement threshold. The movement threshold $\Delta_{move}$ may be determined by, for example, experiments in which the centroid coordinates of a user's digit is held in the same place, allowing the noise in the centroid coordinates to be quantified. The movement threshold $\Delta_{move}$ may then be set as five times the standard error of the measured centroid coordinates with respect to mean centroid coordinates throughout the calibration experiment. Preferably, the movement threshold $\Delta_{move}$ may also take into account variations in the contact area of a user's digit as the applied pressure is increased or decreased, which may cause offset in the centroid coordinates. Again, this effect may be accounted for by conducting suitable calibration experiments.

If the user interaction 27 corresponding to the electrode being processed is determined to be moving (step **S75**), a moving flag is set to a value of "true" (step **S76**).

Preferably, because the decision making electrodes 5', 6' are processed first, the assignment of the moving flag for non-decision making electrodes 5, 6 (steps **S75**, **S76**) may be simplified by assigning the moving flag status of each non-decision making electrode 5, 6 according to the value of the corresponding decision making electrode 5', 6'.

Optionally, a type may be assigned to the user interaction 27 corresponding to the sensing electrode 5, 6 being processed (steps **S77**, **S78**). The measured pressure signal 24 shown in Figures 5 and 6 is of a first or "hard" type, and corresponds to a user placing a digit or conductive stylus relatively quickly, so that there is an initial impact. However, when a user places a digit or conductive stylus on the touch panel 1 gently before slowly increasing the applied force, it may be advantageous to modify the progression through the state register values $S_0$, $S_1$, $S_2$, $S_3$. This second type of user interaction is referred to as a second, or "soft" type herein.

Referring also Figure 17, measured pressure signal 24 values P(t) and corresponding processed pressure signal 25 value P*(t) corresponding to a "soft" type user interaction are shown, along with the transitions between the state register values $S_0$, $S_1$, $S_2$, $S_3$. As discussed hereinafter, the third, or settling state $S_2$ may be omitted when processing "soft" type user interactions 27.

Referring also to Figure 18, the output force 26 values F(t) corresponding to the soft type touch of Figure 17 are shown.

In may be observed that following the start of the user interaction 27 at an initial offset $P_0$, as determined using the capacitance information 20, the pressure signal 24 values P(t) increase above zero to a false peak $P_5$ which it is believed may originate from electrostatic discharge of the user's digit. During the false peak $P_5$, as the state register value is set to the initial state $S_0$, the processed pressure signal P*(t) does not increase above zero during the false peak $P_5$.

However, for a "soft" type user interaction, the initial loading peak $P_1$ may occur relatively later than for a "hard" type user interaction. Furthermore, the pressure signal 24 values P(t) may not immediately decay to the prevailing DC offset $P_{off}$. Instead, charge generation from increased straining of the piezoelectric material layer 9 may be approximately in balance with the decay of the pressure signal 24 values P(t), without reaching or crossing zero. For example, as shown in Figure 17, there may not be a well defined initial loading peak $P_1$ in the measured pressure signal 24.

When "hard" and "soft" type user interactions are implemented, the pressure signal processing module 15 checks whether a type has already been assigned to the user interaction corresponding to the electrode 5, 6 being processed (step **S77**), and if a type has not yet been assigned, a type assignment process is performed (step **S78**). The type assignment process may have three possible outcomes, "hard", "soft" or "undefined", the latter being applied when the conditions for making an assignment to "hard" or "soft" are not yet met. A type assignment is not made until the initial peak $P_1$ is assigned, when the peak counter $C_{peak}$ equals zero. At this point, if the peak time $t_{peak}$ since the beginning of the user interaction (determined from capacitance information 20) exceeds a maximum delay $\Delta t_{max}$, so that $t_{peak} > \Delta t_{max}$, the user interaction is set as a "soft" type. Otherwise, the user interaction is set as a "hard" type. When a user interaction is set as a "soft" type user interaction, the third state S2 may be skipped, as explained hereinafter.

The maximum delay $\Delta t_{max}$ may vary depending on the particular touch panel 1 and system 13, and may be pre-calibrated by performing suitable experiments using applied force profiles having controlled, known ramping rates. The calibration data may be processed separately as a "hard" type and as a "soft" type user interaction, and below a critical ramping rate, the "soft" type processing may provide a closer reconstruction of the applied calibration force profile. The maximum delay $\Delta t_{max}$ may then be adjusted until the type assignment process (step **S78**) assigns the calibration force profiles at or below the critical ramping rate as "soft" type. Other methods of setting a suitable maximum delay $\Delta t_{max}$ could be used by a skilled person.

A "soft" type user interaction may be detected in two broad circumstances. The first is a clean detection of an

initial loading peak $P_1$ which occurs after the maximum delay $\Delta t_{max}$. The second, which is illustrate in Figures 17 and 18, is when a gradually increasing applied force leads to fluctuations in the measured pressure signal 24 which cause the temporary peak value $P_{temp1}$ to be updated when the peak counter $C_{peak}$ satisfies the conditions $0 < C_{peak} \leq N_{detect}/2$, so that the peak counter is set to $C_{peak} = 1$ and a decision on the initial peak $P_1$ location and user interaction type is forced on the next sample.

A slope threshold $m_{flat}$ and a variance threshold $VAR_{flat}$ are set for the electrode being processed (step **S79**). The values of slope and variance thresholds $m_{flat}$, $VAR_{flat}$ are set in dependence upon whether the corresponding user interaction 27 is moving or not. When user interaction types "hard" and "soft" are employed, the values of slope and variance thresholds $m_{flat}$, $VAR_{flat}$ for non-moving user interactions 27 may be set in dependence on whether the user interaction 27 is of a "hard" or "soft" type. The specific threshold values are determined from calibration experiments with known applied force profiles, and should be selected so that the electrode channel updating step (step **S80**) does not detect a flat region and update the residual offset $P_{cor}$ except at times when the known applied force profiles are not increasing or decreasing. In general, the slope and variance thresholds $m_{flat}$, $VAR_{flat}$ for moving user interactions 27 are smaller than the slope and variance thresholds $m_{flat}$, $VAR_{flat}$ for "soft" type user interactions 27, which are in turn smaller than the slope and variance thresholds $m_{flat}$, $VAR_{flat}$ for "hard" type user interactions 27.

An electrode channel updating process is carried out, during which it is determined whether the pressure signal 18 from the electrode 5, 6 being processed is flat, or at least changing slowly enough, to update the residual offset correction value $P_{cor}$ (step **S80**). The determination is made by comparing the slope, $m$, and variance, $VAR$, of the pressure samples $\{P(t,y_n), P(t-1,y_n), ..., P(t-N_{buf6}+1,y_n)\}$ in the push elaboration buffer against the values of slope and variance thresholds $m_{flat}$, $VAR_{flat}$ determined previously (step **S79**). Optionally, it may also be determined whether a "hard" type user interaction should transition into a "soft" type user interaction, and vice-versa.

The processed pressure sample $P^*(t,y_n)$ is obtained by subtracting the present value of the residual offset $P_{cor}(y_n)$ from the pressure sample $P(t,y_n)$ according to $P^*(t,y_n) = P(t,y_n) - P_{cor}(y_n)$ (step **S81**).

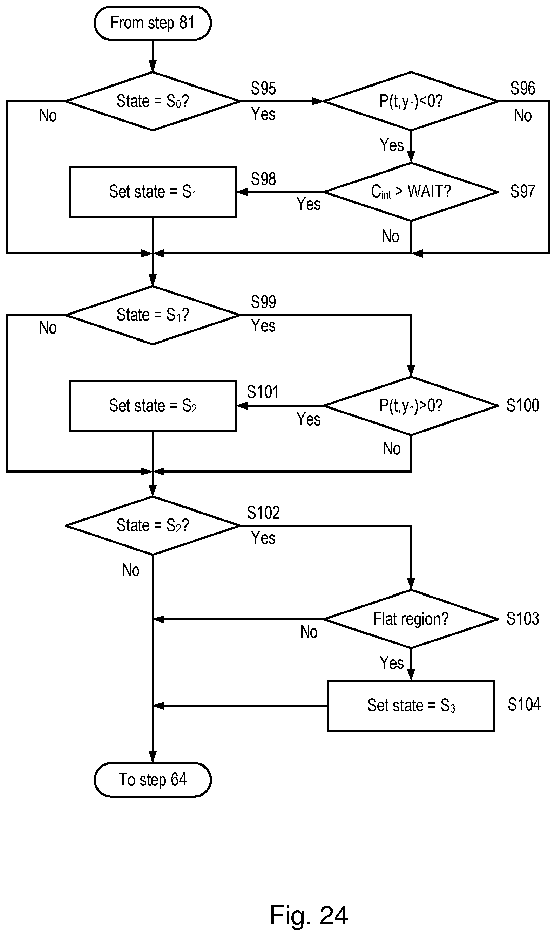

The state register value $S_0$, $S_1$, $S_2$, $S_3$ of the sensing electrode 5, 6 being processed is then updated by a state machine process (step **S82**), details of which are discussed hereinafter (Figure 24).

Electrode channel updating step

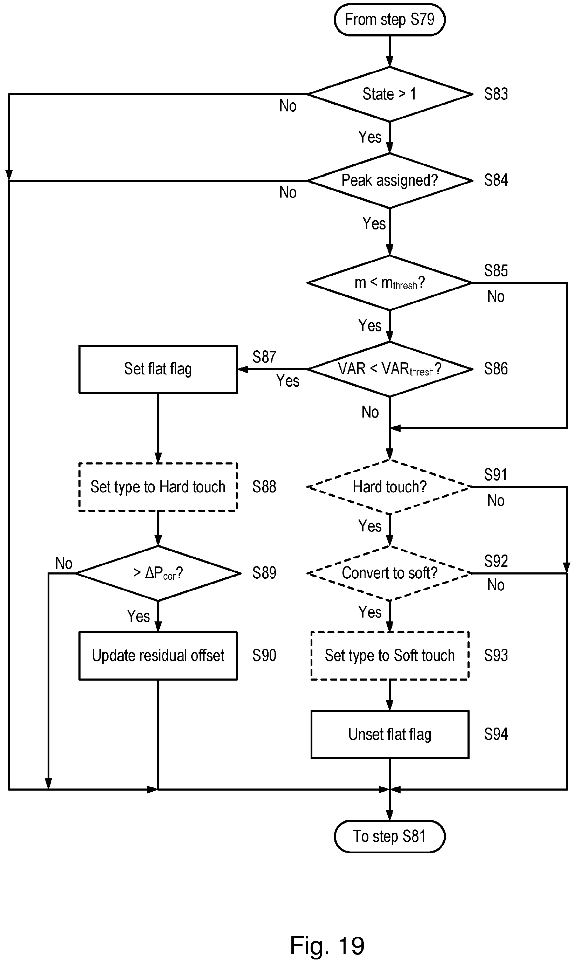

Referring also to Figure 19, a process-flow diagram of an example of the electrode channel updating process (step **S80**) is shown.

The channel updating process is not carried out when the state register value corresponds to the first or second states $S_0$, $S_1$ (step **S83**), or when the initial peak $P_1$ has not yet been assigned (step **S84**)

If the sensing electrode being process has a state register value corresponding to the third or fourth states $S_2$, $S_3$ (step **S83**) and the initial peak value $P_1$ has been assigned (step **S84**), the electrode channel updating process continues. Note that if the optional assignments of "hard" and "soft" types of user interaction are being employed, the assignment will have been made if the initial peak value $P_1$ has been assigned.

If the slope $m$ determined from linear regression (step **S70**) is less than the slope threshold $m_{flat}$ (step **S85**) and the variance $VAR$ from linear regression (step **S70**) is less than the variance threshold $VAR_{flat}$ (step **S86**), then a flat region flag is set to a value "true" for the sensing electrode 5, 6 being processed (step **S87**). In general, the slope and variance thresholds $m_{flat}$, $VAR_{flat}$ for moving user interactions are smaller than the slope and variance thresholds $m_{flat}$, $VAR_{flat}$ for "soft" type user interactions, which are in turn smaller than the slope and variance thresholds $m_{flat}$, $VAR_{flat}$ for "hard" type user interactions. In this way, the conditions for updating the residual offset correction value $P_{cor}$ may be relatively stricter for moving or "soft" type user interactions 27 than for "hard" type user interactions 27. This may avoid continuous updates to the residual offset correction value $P_{cor}$ erroneously discounting a gradually increasing or decreasing applied force during movement or a "soft" type user interaction.

If the optional "soft" and "hard" type assignments are used, then a "soft" type user interaction 27 is re-assigned as a "hard" type user interaction in response to determining a flat region (step **S88**).

The residual offset correction $P_{cor}$ cannot be continuously updated during flat periods of the pressure signal 18 for the sensing electrode 5, 6 being processed, since this would lead to ignoring small changes in applied force. Instead, the difference of the current residual offset $P_{cor}$ and the mean value obtained from the linear regression (step **S70**) is obtained as $P_{cor}$ - MEAN($\{P(t,y_n), P(t-1,y_n), ..., P(t-N_{buf6}+1,y_n)\}$), and if the magnitude of this difference exceeds a threshold value $\Delta P_{cor}$ (step **S89**), the residual offset correction value $P_{cor}$ is updated as $P_{cor}$ = MEAN($\{P(t,y_n), P(t-1,y_n), ..., P(t-N_{buf6}+1,y_n)\}$) (step **S90**).

However, if the slope $m$ determined from linear regression (step **S70**) is greater than or equal to the slope threshold $m_{flat}$ (step **S85**) or the variance $VAR$ from linear regression (step **S70**) is greater than or equal to the variance threshold $VAR_{flat}$ (step **S86**), then the flat region flag is set to a value "false" for the sensing electrode 5, 6 being processed (step **S94**).

Optionally, if a user interaction 27 is a "hard" type (step **S91**), the pressure signal processing module 15 determines whether the user interaction 27 should be re-assigned as a "soft" type user interaction 27 (step **S92**). The user interaction 27 should be re-assigned as a "soft" type user interaction if the pressure sample $P(t, y_n)$ exceeds a prespecified fraction $f_{soft}$ of the stored magnitude of the initial loading peak $P_1$ and when the magnitude of the slope m determined from linear regression (step **S70**) exceeds a maximum value $m_{soft}$. When these conditions are met, the user interaction can no longer be assumed to be a "hard" type, and is set to a "soft" type instead (step **S93**). The fraction $f_{soft}$ and the maximum value $m_{soft}$ may be determined for a given touch panel 1 and system 13 from suitable calibration experiments using predetermined applied force profiles, and may vary within the ranges $0.1 \leq f_{soft} \leq 0.9$ and $0.5 < m_{soft} < 5$.

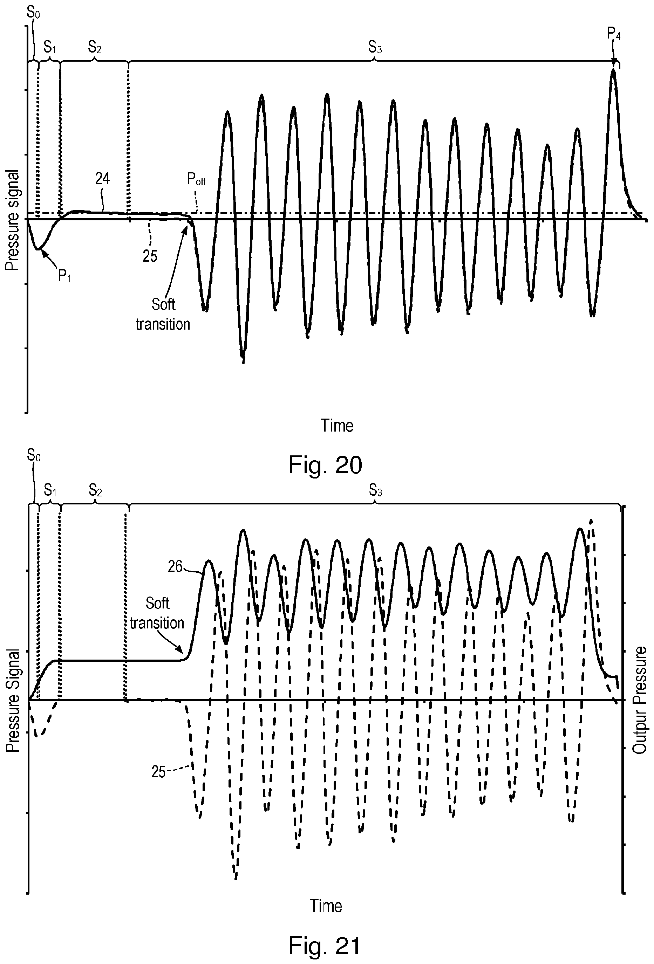

Referring also to Figures 20 and 21, a measured pressure signal 24, processed pressure signal 25 and output force 26 are shown for a "hard" type user interaction 27 which transitions to a "soft" type user interaction 27. The point of the transition is indicated on the figures by the arrow labelled "Soft transition". Note that the terms "hard" and "soft" do not necessarily correlate with the actual magnitude of the pressure signal 24 and force output 26. Rather, the terms "hard" and "soft" are more closely related to the initial rate of increase of the pressure signal 24. The inventors have found that inaccurate handling of the initial increase of the pressure signal 24 can have significant effects on the subsequent measurement of output forces 26 for the remainder of a user interaction 27, and that the distinction between "hard" and "soft" type user interactions 27 may, in some examples, improve accuracy of the measured output forces.

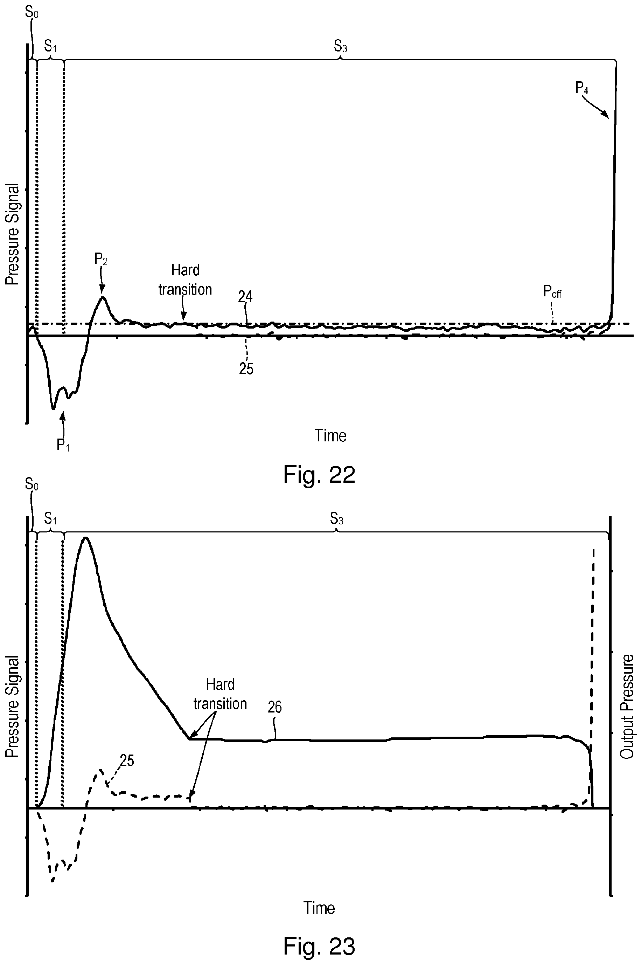

Referring also to Figures 22 and 23, a measured pressure signal 24, processed pressure signal 25 and output force 26 are shown for a "soft" type user interaction 27 which transitions to a "hard" type user interaction 27 because the applied force becomes constant and a flat region is detected. The point of the transition is indicated on the figures by the arrow labelled "Hard transition".

### First state machine

Referring also to Figure 24, a process-flow diagram of a first example of the state machine process (step **S82**) is shown. The first example of the state machine process (step **S82**) does not include the optional assignment of "hard" and "soft" types of user interaction 27.

All new user interactions 27 are initialised in the first, initial state $S_0$, and the state machine (step **S82**) processes the state register value $S_0$, $S_1$, $S_2$, $S_3$ of the sensing electrode 5, 6 being processed with each received pressure sample $P(t, y_n)$, updating the state register value when particular conditions are met.

If the sensing electrode 5, 6 being processed has state register corresponding to the initial state $S_0$ (step **S95**), the pressure sample $P(t, y_n)$ is less than zero (step **S96**), and the time elapsed since the beginning of the user interaction, tracked by the counter $C_{int}$ (step **S57**) exceeds a predetermined minimum value WAIT (step **S97**), the state register of the sensing electrode 5, 6 being processed is updated to the second, primary loading state $S_1$ (step **S98**).

The sign checked in step **S96** depends on the configuration of the touch panel 1 and system 13. If an increasing applied force registers as a decreasing pressure signal 18, as shown in the examples of the present specification, the test is $P(t, y_n) < o$. However, if an increasing applied force registers as an increasing pressure signal 18, then the test would instead by $P(t, y_n) > 0$.

If the sensing electrode 5, 6 being processed has state register corresponding to the second, primary loading state $S_1$ (step **S99**), and the pressure sample $P(t, y_n)$ is greater than zero (step **S100**), the state register of the sensing electrode 5, 6 being processed is updated to the third, settling state $S_2$ (step **S101**).

The sign checked in step **S100** depends on the configuration of the touch panel 1 and system 13. If an increasing applied force registers as a decreasing pressure signal 18, as shown in the examples of the present specification, the test is $P(t, y_n) > o$. However, if an increasing applied force registers as an increasing pressure signal 18, then the test would instead by $P(t, y_n) < 0$.

If the sensing electrode 5, 6 being processed has state register corresponding to the third, settling state $S_2$ (step **S102**), and the flat region flag has the value "true" (step **S103**), then the state register of the sensing electrode 5, 6 being processed is updated to the fourth, stable state $S_3$ (step **S104**). Note that the flat region flag cannot be set to the value "true" until after the initial loading peak $P_1$ has been determined.

### Second state machine

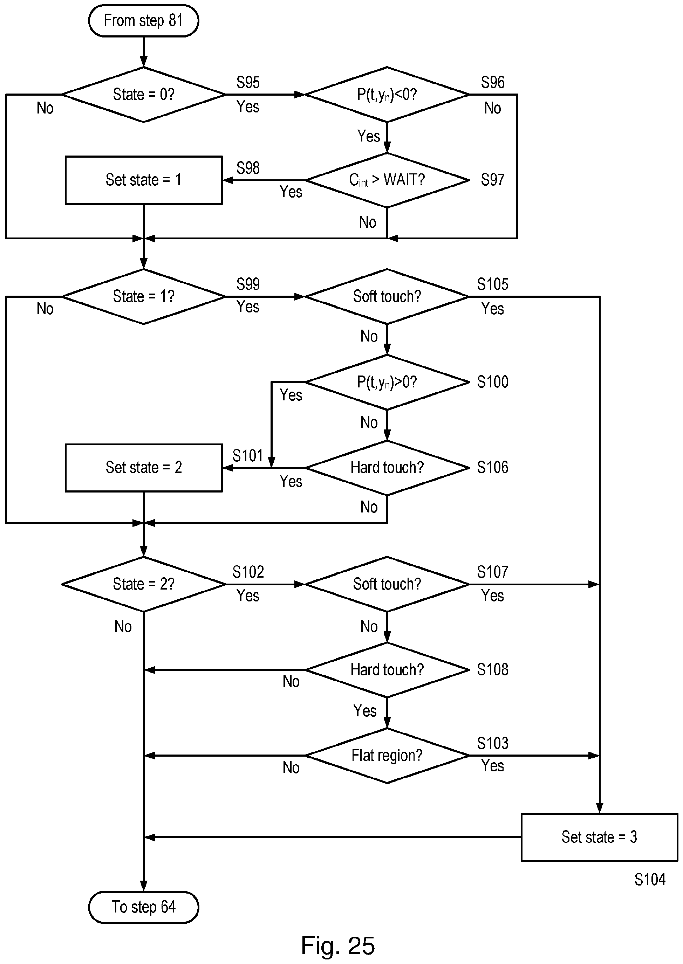

Referring also to Figure 25, a process-flow diagram of a second example of the state machine process (step **S82**) is shown. The second example of the state machine process (step **S82**) includes the optional assignment of "hard" and "soft" type user interactions 27.

The transition between state register values $S_0$ and $S_1$ is the same as for the first state machine (steps **S95** to **S98**).

If the sensing electrode 5, 6 being processed has state register corresponding to the second, primary loading state $S_1$ (step **S99**), and the type of user interaction 27 is "soft" (step **S105**), the state register of the sensing electrode 5, 6 being processed is updated to the fourth, stable state $S_3$ (step **S104**). In this way, a "soft" type user interaction 27 may skip the third, settling state S2.

If the sensing electrode 5, 6 being processed has state register corresponding to the second, primary loading state S1 (step **S99**), the type of user interaction 27 is not "soft" (step **S105**), and either the pressure sample $P(t,y_n)$ is greater than zero (step **S100**) or the type of user interaction 27 is "hard" (step **S106**), the state register of the sensing electrode 5, 6 being processed is updated to the third, settling state $S_2$ (step **S101**).

If the sensing electrode 5, 6 being processed has state register corresponding to the third, settling state S2 (step **S102**), and the type of user interaction 27 is "soft" (step **S107**), the state register of the sensing electrode 5, 6 being processed is updated to the fourth, stable state $S_3$ (step **S104**).

If the sensing electrode 5, 6 being processed has state register corresponding to the third, settling state $S_2$ (step **S102**), the type of user interaction 27 is not "soft" (step **S107**), the type of user interaction 27 is "hard" (step **S108**), and the flat region flag has the value "true" (step **S103**), the state register of the sensing electrode 5, 6 being processed is updated to the fourth, stable state $S_3$ (step **S104**).

Note that the flat region flag and the assignment of "hard" or "soft" type cannot be made until after the initial loading peak $P_1$ has been determined.

Updating output force values

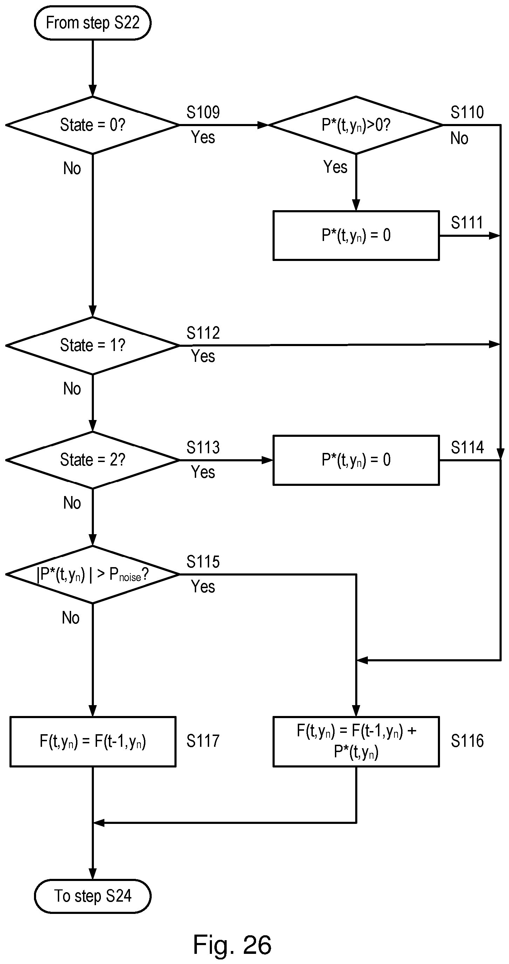

Referring also to Figure 26, a process flow diagram of an example of updating the output force 26 values {F(t, $y_1$), F(t, $y_2$), ..., F(t, $y_N$)}, {F(t, $x_1$), F(t, $x_2$), ..., F(t, $x_M$)} (step **S23**) is shown.

The step of updating the output force values (step **S23**) is carried out for each sensing electrode 5, 6, and the ordering of the sensing electrodes 5, 6 is not important for this process. For example, the ordering used for the push elaboration process (step **S22**) may be used. The output force updating process shall be explained with reference to the $n^{th}$ of N first sensing electrodes 5, however, the output force updating process is the same for each other sensing electrode 5, 6.

If the $n^{th}$ of N first sensing electrodes 5 has state register corresponding to the first, initial state $S_0$ (step **S109**) and the processed pressure sample $P^*(t,y_n)$ is greater than zero (step **S110**), then the processed pressure sample $P^*(t,y_n)$ is set equal to zero (step **S111**) and the output force is updated as $F(t,y_n) = F(t-1,y_n) + P^*(t,y_n)$ (step **S116**).

The sign checked in step **S110** depends on the configuration of the touch panel 1 and system 13. If an increasing applied force registers as a decreasing pressure signal 24, as shown in the examples of the present specification, the test is $P^*(t,y_n) > 0$. However, if an increasing applied force registers as an increasing pressure signal 24, then the test would instead by $P(t,y_n) < 0$.

If the $n^{th}$ of N first sensing electrodes 5 has state register corresponding to the first, initial state $S_0$ (step **S109**) and the processed pressure sample $P^*(t,y_n)$ is less than or equal to zero (step **S110**). then the output force is updated as $F(t,y_n) = F(t-1,y_n) + P^*(t,y_n)$ (step **S116**).

If the $n^{th}$ of N first sensing electrodes 5 has state register corresponding to the second, primary loading state $S_1$ (step **S112**), then the output force is updated as $F(t,y_n) = F(t-1,y_n) + P^*(t,y_n)$ (step **S116**).

If the $n^{th}$ of N first sensing electrodes 5 has state register corresponding to the third, settling state S2 (step **S113**), then the pressure sample $P^*(t,y_n)$ is unconditionally set equal to zero (step **S114**) and the output force is updated as $F(t,y_n) = F(t-1,y_n) + P^*(t,y_n)$ (step **S116**).

If the $n^{th}$ of N first sensing electrodes 5 has state register corresponding to the fourth, stable state $S_3$, i.e. not in the initial state $S_0$ (step **S109**), the primary loading state $S_1$ (step **S112**) or the settling state S2 (step **S113**), then if the magnitude of the processed pressure sample $P^*(t,y_n)$ exceeds a pre-determined noise threshold $P_{noise}$ (step **S115**), then the output force is updated as $F(t,y_n) = F(t-1,y_n) + P^*(t,y_n)$ (step **S116**).

If the $n^{th}$ of N first sensing electrodes 5 has stage register corresponding to the fourth, stable state $S_3$, i.e. not in the initial state $S_0$ (step **S109**), the primary loading state $S_1$ (step **S112**) or the settling state S2 (step **S113**), then if the magnitude of the processed pressure sample $P^*(t,y_n)$ does not exceed the pre-determined noise threshold $P_{noise}$ (step **S115**), then the output force is updated as $F(t,y_n) = F(t-1,y_n)$ (step **S117**).

In other examples, the updating of the output forces F(t) may use higher order numerical integration, such as, for example, the trapezium rule, i.e. $F(t,y_n) = F(t-1,y_n) + 0.5^*(P^*(t,y_n) + P^*(t-1,y_n))$

**Modifications**

It will be appreciated that many modifications may be made to the embodiments hereinbefore described. Such modifications may involve equivalent and other features which are already known in the design, manufacture and use of capacitive touch panels and which may be used instead of or in addition to features already described herein. Features of one embodiment may be replaced or supplemented by features of another embodiment. For example, features of one display stack-up or embedded display stack-up may be replaced or supplemented by features of other display stack-ups and/or other embedded display stack-ups.

The methods of the present specification may be of use in any touch panel system which is capable of using capacitive touch methods to measure the capacitance information 20 comprising the number and locations of one or more user interactions, and which is also capable, either concurrently or consecutively, of measuring pressure signals 18 generated by straining a layer of piezoelectric material 9. In the touch panel 1 and system 13, the pressure and capacitance signals 18, 19 are generated by a single set of electrodes. However, the methods of the present specification are equally applicable to entirely separate piezoelectric and capacitive touch sensors which are, interleaved with one another or stacked on top of one another.

Although the measurement front end 14, the pressure signal processing module 15 and the capacitance signal processing module 16 have been described as separate components, this need not be the case. In some example, the pressure signal processing module 15 and the capacitance signal processing module 16 may be integrated and provided by a single controller or application specific integrated circuit (ASIC). In further examples, the functionalities of the measurement front end 14, the pressure signal processing module 15 and the capacitance signal processing module 16 may all be provided by a single controller or ASIC.

Whilst a detailed implementation of the methods of the present specification has been described in relation to Figures 8 to 26, it should be appreciated that any given step or process of the exemplary implementation may be isolated and separately implemented in the methods of the present specification, subject only to also implementing steps or processes which provide necessary input for the given step or process.

**Claims**

1. A method comprising:

    receiving (S1, S2), from a touch panel (1), pressure signals (18) from a plurality of piezoelectric sensors and capacitance signals (19) from a plurality of capacitive touch sensors;
    determining (S3), based on the capacitance signals, a user interaction period during which a user interaction (27A) with the touch panel occurs;
    generating (S4) processed pressure signals based on the received pressure signals;
    measuring (S8) a force (21) applied to each of the plurality of piezoelectric sensors by the user interaction during the user interaction period based on conditionally integrating the corresponding processed pressure signals according to a value ($S_0$, $S_1$, $S_2$, $S_3$) of a state register corresponding to the user interaction, wherein each value of the state register corresponds to different behaviour for integrating the processed pressure signals;
    wherein the state register takes one of two or more values, wherein each user interaction is initialised in a first state value, and wherein the user interaction transitions between state register values during each user interaction in dependence upon the current state register value and one or more pressure signal properties.

2. A method according to claim 1, further comprising, for each piezoelectric sensor:

    in response to detecting the start of a user interaction (27A), setting a residual DC offset value to zero;
    during the user interaction period:

        maintaining (S55) a sample buffer of processed pressure signal values;
        determining (S70) a gradient and variance of the values stored in the sample buffer;
        determining a difference between the residual DC offset value and the average value of the values stored in the sample buffer; and
        in response to the gradient (S85) and variance (S86) being less than corresponding flat-period threshold values and the difference (S89)being greater than an offset-shift threshold, updating the (S90) residual DC offset value to the average value of the values stored in the sample buffer;

    subtracting (S81) the residual DC offset value from the processed pressure signal before integration.

3. A method according to claim 2, further comprising setting a movement flag (S76) to a value of true in response to determining (S75), based on the capacitance signals, that the location of a user interaction is moving;

    in response to the movement flag does not have a value of true, setting (S79) the flat-period threshold values to first predetermined flat-period threshold values;
    in response to the movement flag has a value of true, setting (S79) the flat-period threshold values to second predetermined flat-period threshold values.

4. A method according to any preceding claim, further comprising:

for each piezoelectric sensor, locating and determining (S73, S74) an initial peak value of the processed pressure signal during the user interaction period
setting (S78) a user interaction type register to correspond to a soft touch value in response to the elapsed time since the start of the user interaction period exceeds a predetermined threshold value;
setting (S78) the user interaction type register to correspond to a hard touch value in response to the elapsed time since the start of the user interaction period does not exceed the predetermined threshold value.

5. A method according to claim 4, when dependent from claims 2 or 3, further comprising setting (S88) the user interaction type register to the hard touch value in response to:

the residual DC offset value is updated (S90); and
the user interaction type register corresponds to the soft touch value.

6. A method according claims 4 or 5, when dependent from claims 2 or 3, further comprising setting (S93) the user interaction type register to the soft touch value in response to (S92):

the processed pressure signal exceeds a predetermined fraction of the initial peak value;
the gradient of the values stored in the sample buffer exceed a soft-transition threshold; and
the user interaction type register corresponds to the hard touch value.

7. A method according to any preceding claim, further comprising setting (S98) the state register to a second state value $(S_1)$ in response to:

the state register corresponds (S95) to the first state value $(S_0)$;
a time elapsed since the start of the user interaction exceeds a minimum duration (S97); and
the processed pressure signal has a sign corresponding to an increasing force (S96).

8. A method according to claim 7, further comprising setting (S101) the state register to a third state value (S2) in response to:

the state register corresponds (S99) to the second state value $(S_1)$; and
the processed pressure signal has a sign corresponding to a decreasing force (S100).

9. A method according to claim 8, when dependent from any one of claims 4 to 6, further comprising setting (S101) the state register to a fourth state value $(S_3)$ in response to:

the state register corresponds (S99) to the second state value $(S_1)$; and
the user interaction type register corresponds to the soft touch value (S105).

10. A method according to claims 8 or 9, further comprising:

determining a signal gradient of the processed pressure signal during the user interaction (S70); and
setting (S104) the state register to a fourth state value $(S_3)$ in response to:

the state register corresponds (S102) to the third state value (S2); and
the processed pressure signal has a signal gradient below a signal gradient threshold (S103);

optionally wherein if the state register corresponds to the fourth state value, processed pressure signal values which exceed a noise threshold (S115) are integrated (S116) and processed pressure signal values which do not exceed the noise threshold are not integrated (S117).

11. A method according to any preceding claim, wherein if the state register corresponds (S109) to the first state value $(S_0)$, processed pressure signal values having a sign corresponding to an increasing force (S110) are integrated (S116) and processed pressure signal values corresponding to a decreasing force are not integrated (S111).

12. A method according to any one of claims 7 to 10, wherein if the state register corresponds (S112) to the second

state value ($S_1$), all processed pressure signal values are integrated (S116).

13. A method according to any one of claims 8 to 10, wherein if the state register corresponds (S113) to the third state value (S2), no processed pressure signal values are integrated (S114).

14. A method according to any preceding claim, comprising:

determining, based on the capacitance signals (19), two or more user interactions (27A, 27B) with the touch panel (1);
determining a location of each user interaction based on the capacitance signals;
assigning a piezoelectric sensor which is closest to the location of each user interaction as a decision making sensor (1*, 2*, 3*);
assigning each other piezoelectric sensor to correspond to the closest decision making sensor;
in response to a piezoelectric sensor is a decision making sensor, updating a state register corresponding to the piezoelectric sensor independently;
in response to a piezoelectric sensor is not a decision making sensor, updating a state register corresponding to the piezoelectric sensor to be equal to the state register of the corresponding decision making sensor.

15. A controller (15) configured for connection to a touch panel (1) comprising a plurality of piezoelectric sensors and a plurality of capacitive touch sensors, the controller configured to:

receive (S1, S2) pressure signals (18) from the plurality of piezoelectric sensors and capacitance signals (19) from the plurality of capacitive touch sensors;
determine (S3), based on the capacitance signals, a user interaction period during which a user interaction (27A) with the touch panel occurs;
generate (S4) processed pressure signals based on the received pressure signals;
measure (S8) a force (21) applied to each of the plurality of piezoelectric sensors by the user interaction during the user interaction period based on conditionally integrating the corresponding processed pressure signals according to a value ($S_0$, $S_1$, $S_2$, $S_3$) of a state register corresponding to the user interaction, wherein each value of the state register corresponds to different behaviour for integrating the processed pressure signals;
wherein the state register takes one of two or more values, wherein each user interaction is initialised in a first state value, and wherein the user interaction transitions between state register values during each user interaction in dependence upon the current state register value and one or more pressure signal properties.

## Patentansprüche

1. Verfahren, umfassend:

Empfangen (S1, S2), von einem Berührungsfeld (1), von Drucksignalen (18) von einer Vielzahl von piezoelektrischen Sensoren und Kapazitätssignalen (19) von einer Vielzahl von kapazitiven Berührungssensoren;
Bestimmen (S3) einer Benutzerinteraktionsperiode, während der eine Benutzerinteraktion (27A) mit dem Berührungsfeld auftritt, auf Grundlage der Kapazitätssignale;
Erzeugen (S4) verarbeiteter Drucksignale auf Grundlage der empfangenen Drucksignale;
Messen (S8) einer Kraft (21), die während der Benutzerinteraktionsperiode durch die Benutzerinteraktion auf jeden der Vielzahl von piezoelektrischen Sensoren ausgeübt wird, auf Grundlage von bedingtem Integrieren der entsprechenden verarbeiteten Drucksignale gemäß einem Wert ($S_0$, $S_1$, $S_2$, $S_3$) eines Zustandsverzeichnisses, das der Benutzerinteraktion entspricht, wobei jeder Wert des Zustandsverzeichnisses einem unterschiedlichen Verhalten zum Integrieren der verarbeiteten Drucksignale entspricht;
wobei das Zustandsverzeichnis einen von zwei oder mehr Werten annimmt, wobei jede Benutzerinteraktion in einem ersten Zustandswert initialisiert wird und wobei die Benutzerinteraktion während jeder Benutzerinteraktion in Abhängigkeit von dem aktuellen Zustandsverzeichniswert und einem oder mehreren Drucksignaleigenschaften zwischen Zustandsverzeichniswerten übergeht.

2. Verfahren nach Anspruch 1, ferner umfassend für jeden piezoelektrischen Sensor:

Einstellen eines Rest-DC-Offset-Wertes auf null als Reaktion auf Erfassen des Starts einer Benutzerinteraktion ($27_A$);

während der Benutzerinteraktionsperiode:

> Beibehalten (S55) eines Abtastpuffers von verarbeiteten Drucksignalwerten;
> Bestimmen (S70) eines Gradienten und einer Varianz der in dem Abtastpuffer gespeicherten Werte;
> Bestimmen einer Differenz zwischen dem Rest-DC-Offset-Wert und dem Mittelwert der in dem Abtastpuffer gespeicherten Werte; und
> Aktualisieren des (S90) Rest-DC-Offset-Wertes auf den Durchschnittswert der in dem Abtastpuffer gespeicherten Werte als Reaktion darauf, dass der Gradient (S85) und die Varianz (S86) kleiner als entsprechende Schwellenwerte einer flachen Periode sind und die Differenz (S89) größer als ein Offset-Verschiebungsschwellenwert ist;
> Subtrahieren (S81) des Rest-DC-Offset-Wertes von dem verarbeiteten Drucksignal vor der Integration.

3. Verfahren nach Anspruch 2, ferner umfassend Einstellen eines Bewegungs-Flags (S76) auf einen Wert von wahr als Reaktion auf Bestimmen (S75), dass sich der Ort einer Benutzerinteraktion bewegt, auf Grundlage der Kapazitätssignale;

> Einstellen (S79) der Schwellenwerte einer flachen Periode auf erste vorbestimmte Schwellenwerte einer flachen Periode als Reaktion darauf, dass das Bewegungs-Flag keinen Wert von wahr aufweist;
> Einstellen (S79) der Schwellwerte der flachen Periode auf zweite vorbestimmte Schwellwerte der flachen Periode als Reaktion darauf, dass das Bewegungs-Flag einen Wert von wahr aufweist.

4. Verfahren nach einem vorhergehenden Anspruch, ferner umfassend:

> Lokalisieren und Bestimmen (S73, S74) eines anfänglichen Spitzenwertes des verarbeiteten Drucksignals während der Benutzerinteraktionsperiode für jeden piezoelektrischen Sensor;
> Einstellen (S78) eines Benutzerinteraktionstypverzeichnisses, um einem Soft-Touch-Wert zu entsprechen, als Reaktion darauf, dass die verstrichene Zeit seit dem Start der Benutzerinteraktionsperiode einen vorbestimmten Schwellenwert überschreitet;
> Einstellen (S78) des Benutzerinteraktionstypverzeichnisses, um einem Hard-Touch-Wert zu entsprechen, als Reaktion darauf, dass die verstrichene Zeit seit dem Start der Benutzerinteraktionsperiode den vorbestimmten Schwellenwert nicht überschreitet.

5. Verfahren nach Anspruch 4 in Abhängigkeit von Anspruch 2 oder 3, ferner umfassend Einstellen (S88) des Benutzerinteraktionstypverzeichnisses auf den Hard-Touch-Wert als Reaktion auf Folgendes:

> der Rest-DC-Offset-Wert ist aktualisiert (S90); und
> das Benutzerinteraktionstypverzeichnis entspricht dem Soft-Touch-Wert.

6. Verfahren nach Anspruch 4 oder 5 in Abhängigkeit von Anspruch 2 oder 3, ferner umfassend Einstellen (S93) des Benutzerinteraktionstypverzeichnisses auf den Soft-Touch-Wert als Reaktion auf Folgendes (S92):

> das verarbeitete Drucksignal überschreitet einen vorbestimmten Bruchteil des anfänglichen Spitzenwertes;
> der Gradient der in dem Abtastpuffer gespeicherten Werte überschreitet einen Soft-Transition-Schwellenwert; und
> das Benutzerinteraktionstypverzeichnis entspricht dem Hard-Touch-Wert.

7. Verfahren nach einem der vorhergehenden Ansprüche, ferner umfassend Einstellen (S98) des Zustandsverzeichnisses auf einen zweiten Zustandswert ($S_1$) als Reaktion auf Folgendes:

> das Zustandsverzeichnis entspricht (S95) dem ersten Zustandswert ($S_0$);
> eine seit dem Start der Benutzerinteraktion verstrichene Zeit überschreitet eine Mindestdauer (S97); und
> das verarbeitete Drucksignal weist ein einer zunehmenden Kraft (S96) entsprechendes Vorzeichen auf.

8. Verfahren nach Anspruch 7, ferner umfassend Einstellen (S101) des Zustandsverzeichnisses auf einen dritten Zustandswert ($S_2$) als Reaktion auf Folgendes:

> das Zustandsverzeichnis entspricht (S99) dem zweiten Zustandswert ($S_1$); und
> das verarbeitete Drucksignal weist ein einer abnehmenden Kraft (S100) entsprechendes Vorzeichen auf.

EP 3 743 795 B1

9. Verfahren nach Anspruch 8 in Abhängigkeit von einem der Ansprüche 4 bis 6, ferner umfassend Einstellen (S101) des Zustandsverzeichnisses auf einen vierten Zustandswert ($S_3$) als Reaktion auf Folgendes:

das Zustandsverzeichnis entspricht (S99) dem zweiten Zustandswert ($S_1$); und
das Benutzerinteraktionstypverzeichnis entspricht dem Soft-Touch-Wert (S105).

10. Verfahren nach Anspruch 8 oder 9, ferner umfassend:

Bestimmen eines Signalgradienten des verarbeiteten Drucksignals während der Benutzerinteraktion (S70); und
Einstellen (S104) des Zustandsverzeichnisses auf einen vierten Zustandswert ($S_3$) als Reaktion auf Folgendes:

das Zustandsverzeichnis entspricht (S102) dem dritten Zustandswert ($S_2$); und
das verarbeitete Drucksignal weist einen Signalgradienten unterhalb einer Signalgradientenschwelle (S103) auf;

wobei optional, wenn das Zustandsverzeichnis dem vierten Zustandswert entspricht, verarbeitete Drucksignalwerte, die eine Rauschschwelle (S115) überschreiten, integriert (S116) werden und verarbeitete Drucksignalwerte, welche die Rauschschwelle nicht überschreiten, nicht integriert (S117) werden.

11. Verfahren nach einem der vorhergehenden Ansprüche, wobei, wenn das Zustandsverzeichnis dem ersten Zustandswert ($S_0$) entspricht (S109), verarbeitete Drucksignalwerte, die ein einer zunehmenden Kraft (S110) entsprechendes Vorzeichen aufweisen, integriert (S116) werden und verarbeitete Drucksignalwerte, die einer abnehmenden Kraft entsprechen, nicht integriert (S111) werden.

12. Verfahren nach einem der Ansprüche 7 bis 10, wobei, wenn das Zustandsverzeichnis dem zweiten Zustandswert ($S_1$) entspricht (S112), alle verarbeiteten Drucksignalwerte integriert werden (S116).

13. Verfahren nach einem der Ansprüche 8 bis 10, wobei, wenn das Zustandsverzeichnis dem dritten Zustandswert ($S_2$) entspricht (S113), keine verarbeiteten Drucksignalwerte integriert (S114) werden.

14. Verfahren nach einem der vorhergehenden Ansprüche, umfassend:

Bestimmen von zwei oder mehr Benutzerinteraktionen (27A, 27B) mit dem Berührungsfeld (1) auf Grundlage von zwei oder mehr Kapazitätssignalen (19);
Bestimmen eines Ortes jeder Benutzerinteraktion auf Grundlage der Kapazitätssignale;
Zuweisen eines piezoelektrischen Sensors, der dem Ort jeder Benutzerinteraktion am nächsten ist, als Entscheidungsfindungssensor (1*, 2*, 3*);
Zuweisen jedes anderen piezoelektrischen Sensors, um dem nächstgelegenen Entscheidungsfindungssensor zu entsprechen;
unabhängiges Aktualisieren eines Zustandsverzeichnisses, das dem piezoelektrischen Sensor entspricht, als Reaktion darauf, dass ein piezoelektrischer Sensor ein Entscheidungsfindungssensor ist;
Aktualisieren eines Zustandsverzeichnisses, das dem piezoelektrischen Sensor entspricht, sodass es gleich dem Zustandsverzeichnis des entsprechenden Entscheidungsfindungssensors ist, als Reaktion darauf, dass ein piezoelektrischer Sensor kein Entscheidungsfindungssensor ist.

15. Steuerung (15), die zur Verbindung mit einem Berührungsfeld (1) konfiguriert ist, das eine Vielzahl von piezoelektrischen Sensoren und eine Vielzahl von kapazitiven Berührungssensoren umfasst, wobei die Steuerung zu Folgendem konfiguriert ist:

Empfangen (S1, S2) von Drucksignalen (18) von der Vielzahl von piezoelektrischen Sensoren und Kapazitätssignalen (19) von der Vielzahl von kapazitiven Berührungssensoren;
Bestimmen (S3) einer Benutzerinteraktionsperiode, während der eine Benutzerinteraktion (27A) mit dem Berührungsfeld auftritt, auf Grundlage der Kapazitätssignale;
Erzeugen (S4) verarbeiteter Drucksignale auf Grundlage der empfangenen Drucksignale;
Messen (S8) einer Kraft (21), die während der Benutzerinteraktionsperiode durch die Benutzerinteraktion auf jeden der Vielzahl von piezoelektrischen Sensoren ausgeübt wird, auf Grundlage von bedingtem Integrieren der entsprechenden verarbeiteten Drucksignale gemäß einem Wert ($S_0$, $S_1$, $S_2$, $S_3$) eines Zustandsverzeichnisses, das der Benutzerinteraktion entspricht, wobei jeder Wert des Zustandsverzeichnisses einem unterschiedlichen Verhalten zum Integrieren der verarbeiteten Drucksignale entspricht;

wobei das Zustandsverzeichnis einen von zwei oder mehr Werten annimmt, wobei jede Benutzerinteraktion in einem ersten Zustandswert initialisiert wird und wobei die Benutzerinteraktion während jeder Benutzerinteraktion in Abhängigkeit von dem aktuellen Zustandsverzeichniswert und einem oder mehreren Drucksignaleigenschaften zwischen Zustandsverzeichniswerten übergeht.

**Revendications**

1. Procédé comprenant :

la réception (S1, S2), en provenance d'un panneau tactile (1), des signaux de pression (18) provenant d'une pluralité de capteurs piézoélectriques et des signaux de capacité (19) provenant d'une pluralité de capteurs tactiles capacitifs ;

la détermination (S3), sur la base des signaux de capacité, d'une période d'interaction d'utilisateur durant laquelle une interaction d'utilisateur (27A) avec le panneau tactile se produit ;

la génération (S4) des signaux de pression traités sur la base des signaux de pression reçus ;

la mesure (S8) d'une force (21) appliquée à chacun de la pluralité de capteurs piézoélectriques par l'interaction d'utilisateur durant la période d'interaction d'utilisateur sur la base de l'intégration conditionnelle des signaux de pression traités correspondants selon une valeur ($S_0$, $S_1$, $S_2$, $S_3$) d'un registre d'état correspondant à l'interaction d'utilisateur, chaque valeur du registre d'état correspondant à un comportement différent pour intégrer les signaux de pression traités ;

le registre d'état prenant l'une de deux, ou plus, valeurs, chaque interaction d'utilisateur étant initialisée dans une première valeur d'état, et ladite interaction d'utilisateur effectuant une transition entre des valeurs de registre d'état durant chaque interaction d'utilisateur en fonction de la valeur de registre d'état actuelle et d'une ou plusieurs propriétés du signal de pression.

2. Procédé selon la revendication 1, comprenant en outre, pour chaque capteur piézoélectrique :

en réponse à la détection du début d'une interaction d'utilisateur ($27_A$), le réglage d'une valeur de décalage DC résiduel à zéro ;

durant la période d'interaction d'utilisateur :

le maintien (S55) d'un tampon d'échantillons de valeurs de signal de pression traité ;

la détermination (S70) d'un gradient et d'une variance des valeurs stockées dans le tampon d'échantillons ;

la détermination d'une différence entre la valeur de décalage DC résiduelle et la valeur moyenne des valeurs stockées dans le tampon d'échantillons ; et

en réponse au gradient (S85) et à la variance (S86) qui sont inférieurs aux valeurs seuils de période plate correspondantes et à la différence (S89) qui est supérieure à un seuil de déplacement de décalage, la mise à jour de la valeur de décalage CC résiduel (S90) à la valeur moyenne des valeurs stockées dans le tampon d'échantillons ;

la soustraction (S81) de la valeur de décalage DC résiduelle du signal de pression traité avant intégration.

3. Procédé selon la revendication 2, comprenant en outre l'établissement d'un indicateur de mouvement (S76) à une valeur vraie en réponse à la détermination (S75), sur la base des signaux de capacité, que l'emplacement d'une interaction d'utilisateur se déplace ;

en réponse à l'indicateur de mouvement qui ne possède pas la valeur vrai, le réglage (S79) des valeurs seuils de période plate à des premières valeurs seuils de période plate prédéfinies ;

en réponse à l'indicateur de mouvement qui possède une valeur vraie, le réglage (S79) des valeurs seuils de période plate à des secondes valeurs seuils de période plate prédéfinies.

4. Procédé selon une quelconque revendication précédente, comprenant en outre :

pour chaque capteur piézoélectrique, la localisation et la détermination (S73, S74) d'une valeur de pic initiale du signal de pression traité durant la période d'interaction d'utilisateur le réglage (S78) d'un registre de type d'interaction d'utilisateur pour correspondre à une valeur de toucher doux en réponse au temps écoulé depuis le début de la période d'interaction avec l'utilisateur qui dépasse une valeur seuil prédéfinie ;

le réglage (S78) du registre de type d'interaction d'utilisateur pour qu'il corresponde à une valeur de contact dur en réponse au temps écoulé depuis le début de la période d'interaction d'utilisateur qui ne dépasse pas la valeur seuil prédéfinie.

5. Procédé selon la revendication 4, lorsqu'elle dépend des revendications 2 ou 3, comprenant en outre le réglage (S88) du registre de type d'interaction d'utilisateur sur la valeur de contact dur en réponse :

à la valeur de décalage DC résiduelle qui est mise à jour (S90) ; et
au registre de type d'interaction utilisateur qui correspond à la valeur de toucher doux.

6. Procédé selon les revendications 4 ou 5, lorsqu'elles dépendent des revendications 2 ou 3, comprenant en outre le réglage (S93) du registre de type d'interaction d'utilisateur sur la valeur de toucher doux en réponse (S92) :

au signal de pression traité qui dépasse une fraction prédéfinie de la valeur de pic initiale ;
au gradient des valeurs stockées dans le tampon d'échantillons qui dépasse un seuil de transition douce ; et
au registre de type d'interaction utilisateur qui correspond à la valeur de toucher dur.

7. Procédé selon une quelconque revendication précédente, comprenant en outre le réglage (S98) du registre d'état à une seconde valeur d'état ($S_1$) en réponse :

au registre d'état qui correspond (S95) à la première valeur d'état ($S_0$) ;
au temps écoulé depuis le début de l'interaction d'utilisateur qui dépasse une durée minimale (S97) ; et
au signal de pression traité qui possède un signe correspondant à une force croissante (S96).

8. Procédé selon la revendication 7, comprenant en outre le réglage (S101) du registre d'état à une troisième valeur d'état ($S_2$) en réponse :

au registre d'état qui correspond (S99) à la seconde valeur d'état ($S_1$) ; et
au signal de pression traité qui possède un signe correspondant à une force décroissante (S100).

9. Procédé selon la revendication 8, lorsqu'elle dépend de l'une quelconque des revendications 4 à 6, comprenant en outre le réglage (S101) du registre d'état à une quatrième valeur d'état ($S_3$) en réponse :

au registre d'état qui correspond (S99) à la seconde valeur d'état ($S_1$) ; et
au registre de type d'interaction d'utilisateur qui correspond à la valeur de toucher doux (S105).

10. Procédé selon la revendication 8 ou 9, comprenant en outre :

la détermination d'un gradient de signal du signal de pression traité durant l'interaction d'utilisateur (S70) ; et
le réglage (S104) du registre d'état à une quatrième valeur d'état ($S_3$) en réponse :

au registre d'état qui correspond (S102) à la troisième valeur d'état ($S_2$) ; et
au signal de pression traité qui possède un gradient de signal inférieur à un seuil de gradient de signal (S103);
éventuellement si le registre d'état correspond à la quatrième valeur d'état, lesdites valeurs de signal de pression traité qui dépassent un seuil de bruit (S115) étant intégrées (S116) et lesdites valeurs de signal de pression traité qui ne dépassent pas le seuil de bruit n'étant pas intégrées (S117).

11. Procédé selon une quelconque revendication précédente, si le registre d'état correspond (S109) à la première valeur d'état ($S_0$), lesdites valeurs de signal de pression traité possédant un signe correspondant à une force croissante (S110) étant intégrées (S116) et lesdites valeurs de signal de pression traité correspondant à une force décroissante n'étant pas intégrées (S111).

12. Procédé selon l'une quelconque des revendications 7 à 10, si le registre d'état correspond (S112) à la seconde valeur d'état ($S_1$), toutes les valeurs de signal de pression traité étant intégrées (S116).

13. Procédé selon l'une quelconque des revendications 8 à 10, si le registre d'état correspond (S113) à la troisième valeur d'état ($S_2$), aucune valeur de signal de pression traité n'étant intégrée (S114).

**14.** Procédé selon une quelconque revendication précédente, comprenant :

la détermination, sur la base des signaux de capacité (19), de deux, ou plus, interactions d'utilisateur (27A, 27B) avec le panneau tactile (1) ;
la détermination d'un emplacement de chaque interaction d'utilisateur sur la base des signaux de capacité ;
l'attribution d'un capteur piézoélectrique qui est le plus proche de l'emplacement de chaque interaction d'utilisateur en tant que capteur de prise de décision (1*, 2*, 3*);
l'attribution de chaque autre capteur piézoélectrique pour correspondre au capteur de prise de décision le plus proche ;
en réponse à un capteur piézoélectrique qui est un capteur de prise de décision, la mise à jour d'un registre d'état correspondant au capteur piézoélectrique indépendamment ;
en réponse à un capteur piézoélectrique qui n'est pas un capteur de prise de décision, la mise à jour d'un registre d'état correspondant au capteur piézoélectrique pour qu'il soit égal au registre d'état du capteur de prise de décision correspondant.

**15.** Dispositif de commande (15) configuré pour être connecté à un panneau tactile (1) comprenant une pluralité de capteurs piézoélectriques et une pluralité de capteurs tactiles capacitifs, le dispositif de commande étant configuré pour :

recevoir (S1, S2) des signaux de pression (18) en provenance de la pluralité de capteurs piézoélectriques et des signaux de capacité (19) en provenance de la pluralité de capteurs tactiles capacitifs ;
déterminer (S3), sur la base des signaux de capacité, une période d'interaction d'utilisateur durant laquelle une interaction d'utilisateur (27A) avec le panneau tactile se produit ;
générer (S4) des signaux de pression traités sur la base des signaux de pression reçus ;
mesurer (S8) une force (21) appliquée à chacun de la pluralité de capteurs piézoélectriques par l'interaction d'utilisateur durant la période d'interaction d'utilisateur sur la base de l'intégration conditionnelle des signaux de pression traités correspondants selon une valeur ($S_0$, $S_1$, $S_2$, $S_3$) d'un registre d'état correspondant à l'interaction d'utilisateur, chaque valeur du registre d'état correspondant à un comportement différent pour intégrer les signaux de pression traités ;
le registre d'état prenant l'une de deux, ou plus, valeurs, chaque interaction d'utilisateur étant initialisée dans une première valeur d'état, et ladite interaction d'utilisateur effectuant une transition entre des valeurs de registre d'état durant chaque interaction d'utilisateur en fonction de la valeur de registre d'état actuelle et d'une ou plusieurs propriétés du signal de pression.

Fig. 1

Fig. 2

Fig. 3

Fig. 4

Fig. 5

Fig. 6

Start

Receive pressure
signals                    S1

Receive capacitance
signals                    S2

User Interaction?          S3

No

Yes

Generate processed
pressure signals           S4

New Interaction?           S5

No                         Yes

Update state flag    S7           Initialise state flag    S6

Updated measured
forces                     S8

Continue                   S9

Yes

No

End

Fig. 7

Fig. 8

Fig. 9

Fig. 10

Fig. 11

```
┌──────────────┐                    ┌────────────────────┐
│ From step S21│──────────────────▶│   Sensor set = 1   │  S53
└──────────────┘                    └────────────────────┘
                                             │
                                             ▼
                                    ┌────────────────────┐
                                    │ Retrieve sensor set│  S54
                                    │    parameters      │
                                    └────────────────────┘
                                             │
                                             ▼
                                    ┌────────────────────┐
                                    │Update pressure     │  S55
                                    │    buffers         │
                                    └────────────────────┘
                                             │
                                             ▼
                                         ◇ P-CAP? ◇  S56    ┌────────────────────┐
                      No ◀────────────◇         ◇───Yes───▶│ Increment counter  │  S57
                       │                                     └────────────────────┘
                       │                                              │
                       │                                              ▼
                       │                                     ┌────────────────────┐
                       │                                     │ Determine decision │  S58
                       │                                     │  making electrodes │
                       │                                     └────────────────────┘
                       │                                              │
                       ▼                                              ▼
┌──────────────┐  ┌────────────────────┐  S60            ◇ Touch changed? ◇  S59
│Reset buffers │  │ (Re-)allocate      │◀────Yes──────◇                ◇
│ and push     │  │ electrode          │                     No │
│   values     │  │ dependencies       │                        │
└──────────────┘  └────────────────────┘                        ▼
   S68                     │                         ┌────────────────────┐
    │                      ▼                         │  Set first ordered │  S62
    ▼             ┌────────────────────┐  S61        │     electrode      │
┌──────────────┐  │ (Re-)allocate      │────────────▶└────────────────────┘
│Reset counter │  │ electrode          │                        │
└──────────────┘  │ processing order   │                        ▼
   S69            └────────────────────┘             ┌────────────────────┐
    │                                                 │  Process electrode │  S63
    │        ┌────────────────────┐  S65              └────────────────────┘
    │        │ Set next electrode │                            │
    │        └────────────────────┘                            │
    │              ▲  Yes                                       │
    │              │                                            ▼
    │          ◇ More electrodes? ◇◀──────S64───────────────────┘
    │          ◇                  ◇
    │                 No │
    │                    ▼
    │          ◇ More sensor sets? ◇  S66
┌──────────────┐  S67
│Next sensor   │◀───Yes──◇         ◇
│   set        │
└──────────────┘          No │
                             ▼
                    ┌──────────────┐
                    │ To step S23  │
                    └──────────────┘
```

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

## REFERENCES CITED IN THE DESCRIPTION

**Patent documents cited in the description**

- US 20100079384 A1
- WO 2016102975 A2
- WO 2017109455 A1
- WO 2017122466 A1
- JP 2015097068 A
- EP 2902886 A1
- WO 2016199626 A1
- EP 2902886 A